# EUROPÄISCHE PATENTSCHRIFT

(11) **EP 2 910 368 B1**
(45) Veröffentlichungstag und Bekanntmachung des Hinweises auf die Patenterteilung: **18.12.2019**
(21) Anmeldenummer: 15154250.3
(22) Anmeldetag: 09.02.2015
(51) Int. Cl.: B31F 1/28

(54) **Wellpappe-Anlage**
Corrugated cardboard assembly
Installation de carton ondulé

(30) Priorität: 12.02.2014 DE 102014202537
(43) Veröffentlichungstag der Anmeldung: 26.08.2015
(73) Patentinhaber: BHS Corrugated Maschinen- und Anlagenbau GmbH, 92729 Weiherhammer (DE)
(72) Erfinder: Hägler, Martin, 92706 Luhe-Wildenau (DE); Kraus, Helmut, 92442 Wackersdorf (DE)
(74) Vertreter: Rau, Schneck & Hübner Patentanwälte Rechtsanwälte PartGmbB

(56) Entgegenhaltungen:
- EP-A1- 1 902 833
- EP-A1- 2 503 421
- US-A- 3 004 880
- US-A1- 2005 284 579

## Beschreibung

Auf den Inhalt der deutschen Patentanmeldung DE 10 2014 202 537.0 wird wollumfänglich Bezug genommen.

Die Erfindung betrifft eine Wellpappe-Anlage zur Herstellung von Wellpappe-Bögen gemäß dem Oberbegriff des Anspruchs 1. Ferner richtet sich die Erfindung auf ein Verfahren zur Herstellung von Wellpappe-Bögen in einer Wellpappe-Anlage.

Wellpappe-Anlagen zur Herstellung von Wellpappe-Bögen sind aus dem Stand der Technik durch offenkundige Vorbenutzung allgemein bekannt. Die Wellpappe-Bögen werden aus endlosen Wellpappe-Bahnen oder aus Teil-Wellpappe-Bahnen erzeugt, die wiederum aus den endlosen Wellpappe-Bahnen stammen. Ein weit verbreitetes Problem bei der Herstellung von Wellpappe-Bögen ist, dass sich die Wellpappe-Bögen nach deren Erzeugung krümmen bzw. wölben. Dies ist im Allgemeinen auf eine fehlerhafte Einstellung der Wellpappe-Anlage, Defekte an der Wellpappe-Anlage und/oder mangelhafte Rohstoffe, wie des Rohpapiers, zurückzuführen. Derartige gekrümmte Wellpappe-Bögen können oftmals nicht weiterverwendet werden.

Aus der US 2005/284579 A1 sind gattungsgemäße Wellpappe-Anlagen bekannt. Die EP 1 902 883 A1, EP 2 503 421 A1 und US 3,004,880 offenbaren weitere Wellpappe-Anlagen.

Der Erfindung liegt daher die Aufgabe zugrunde, eine Wellpappe-Anlage zur Herstellung von Wellpappe-Bögen zu schaffen, die die oben angegebenen Nachteile überwindet. Insbesondere soll eine Wellpappe-Anlage zur Herstellung von Wellpappe-Bögen bereitgestellt werden, die eine gewünschte Krümmung (Soll-Krümmung) haben oder plan sind. Ferner sollen Abweichungen von der gewünschten Krümmung bzw. der gewünschten Erstreckung der Wellpappe-Bögen möglichst frühzeitig bei deren Herstellung erkennbar sein. Ein entsprechendes Verfahren zum Herstellen von Wellpappe-Bögen soll ebenfalls geschaffen werden.

Diese Aufgabe wird erfindungsgemäß durch die in den unabhängigen Ansprüchen 1 und 15 angegebenen Merkmale gelöst. Der Kern der Erfindung liegt darin, dass eine Krümmungs-Detektions-Vorrichtung eine Krümmung von Wellpappe-Bögen und/oder von Teil-Wellpappe-Bahnen detektiert. Die Krümmung der Wellpappe-Bögen ist durch mindestens eine Wellpappe-Bogen-Krümmungs-Beeinflussungs-Einrichtung in Abhängigkeit von Krümmungs-Informationen zu den Wellpappe-Bögen und/oder Teil-Wellpappe-Bahnen beeinflussbar, insbesondere regelbar, so dass die Wellpappe-Bögen eine gewünschte Krümmung bzw. einen gewünschten Verlauf über deren Länge und/oder Breite haben.

Die Informations-Verarbeitungs-Einrichtung führt zu einer äußerst schnellen Reaktions-Zeit, so dass die Anzahl mangelhafter Wellpappe-Bögen auf ein Minimum reduzierbar ist.

Die erste Material-Vorrats-Vorrichtung ist vorzugsweise als Splice-Vorrichtung ausgeführt.

Es ist von Vorteil, wenn auch die zweite Material-Vorrats-Vorrichtung als Splice-Vorrichtung ausgebildet ist.

Günstigerweise umfasst die Quer-Schneide-Vorrichtung mindestens eine Messer-Walze mit mindestens einem Messer zum Quer-Schneiden mindestens der mindestens einseitig kaschierten ersten Wellpappe-Bahn.

Vorzugsweise wird eine endlose Wellpappe-Bahn, die die erste Wellpappe-Bahn ist oder umfasst, in verschiedene Teil-Wellpappe-Bahnen geschnitten und aufgeteilt. Es ist von Vorteil, wenn jeder Teil-Wellpappe-Bahn mindestens eine Messer-Walze mit mindestens einem Messer zum Quer-Schneiden der jeweiligen Teil-Wellpappe-Bahn zugeordnet ist. Es ist von Vorteil, wenn eine Längs-Schneide-Rill-Einrichtung die Teil-Wellpappe-Bahnen aus mindestens der ersten und zweiten Material-Bahn erzeugt.

Die Krümmungs-Detektions-Vorrichtung ist insbesondere imstande zu detektieren, ob die Wellpappe-Bögen und/oder die Teil-Wellpappe-Bahnen über deren Länge und/oder Breite zumindest bereichsweise gekrümmt oder ungekrümmt sind.

Günstigerweise arbeitet die Krümmungs-Detektions-Vorrichtung berührungslos. Die Krümmungs-Detektions-Vorrichtung detektiert beispielsweise die jeweils vorherrschende Distanz zu dem jeweiligen Wellpappe-Bogen bzw. zu der jeweiligen Teil-Wellpappe-Bahn über dessen/deren gesamte Breite und/oder Länge. Alternativ detektiert die Krümmungs-Detektions-Vorrichtung vorzugsweise das Profil des gesamten jeweiligen Wellpappe-Bogens bzw. der gesamten jeweiligen Teil-Wellpappe-Bahn. Besonders bevorzugt ist die Krümmungs-Detektions-Vorrichtung als Laser-Distanz-Detektions-Vorrichtung oder als Linien-Profil-Detektions-Vorrichtung ausgeführt.

Es ist zweckmäßig, wenn die Krümmungs-Detektions-Vorrichtung zumindest in einer Transport-Richtung der Wellpappe-Bahn bzw. der Wellpappe-Bögen unbeweglich ist.

Es ist von Vorteil, wenn die Informations-Verarbeitungs-Einrichtung eine elektronische Informations-Verarbeitungs-Einrichtung ist.

Vorzugsweise sind mehrere Wellpappe-Bogen-Krümmungs-Beeinflussungs-Einrichtungen vorhanden. Es ist von Vorteil, wenn die Informations-Verarbeitungs-Einrichtung Betätigungs-Signale zu mindestens einer der Wellpappe-Bogen-Krümmungs-Beeinflussungs-Einrichtungen schickt, um die Krümmung der Wellpappe-Bögen zu beeinflussen.

Es ist von Vorteil, wenn mindestens eine, vorzugsweise mehrere, bevorzugter alle, der Wellpappe-Bogen-Krümmungs-Beeinflussungs-Einrichtungen bei einer erforderlichen Beeinflussung der Krümmung der Wellpappe-Bögen die Krümmung der Wellpappe-Bögen in deren Transport-Richtung und/oder quer zu deren Transport-Richtung beeinflussen.

Die Krümmung der Wellpappe-Bögen ist beispielsweise durch einseitige Veränderung der Feuchte und/oder Temperatur von mindestens einer Material-Bahn bzw. von mindestens einer Wellpappe-Bahn beeinflussbar.

Es ist zweckmäßig, wenn die Informations-Verarbeitungs-Einrichtung und die mindestens eine Wellpappe-Bogen-Krümmungs-Beeinflussungs-Einrichtung miteinander in drahtloser oder drahtgebundener Signal-Verbindung stehen.

Günstigerweise steht die Krümmungs-Detektions-Vorrichtung und die Informations-Verarbeitungs-Einrichtung miteinander in drahtloser oder drahtgebundener Signal-Verbindung.

Weitere vorteilhafte Ausgestaltungen der Erfindung sind in den Unteransprüchen angegeben.

Es ist von Vorteil, wenn die in dem Unteranspruch 2 angegebene erste Vorheiz-Einrichtung eine erste Vorheiz-Walze umfasst, an der die erste Material-Bahn bereichsweise anliegt. Die erste Material-Bahn wird so von ihrer an der ersten Vorheiz-Walze anliegenden Seite aus zumindest bereichsweise über deren Dicke vorgeheizt. Die Vorheiz-Temperatur der ersten Vorheiz-Walze ist veränderbar, was zu einer Veränderung der Krümmung der Wellpappe-Bögen führt. Eine Erhöhung dieser Vorheiz-Temperatur bewirkt eine Krümmung der Wellpappe-Bögen nach unten, also einen Down Warp.

Durch die in dem Unteranspruch 3 angegebene Leim-Auftrags-Einrichtung ist die Beleimung der ersten und/oder zweiten Material-Bahn veränderbar, was zu einer Veränderung der Krümmung der Wellpappe-Bögen führt. Insbesondere ist die Leim-Auftrags-Menge veränderbar. Alternativ ist die Zusammensetzung, insbesondere die Feuchte des Leims veränderbar. Es ist von Vorteil, wenn die Leim-Auftrags-Einrichtung eine Leim-Auftrags-Walze umfasst, die Leim auf die an ihr anliegenden Seite der jeweiligen Material-Bahn aufträgt. Durch Verstellung der Leim-Auftrags-Walze gegenüber dieser Material-Bahn ist beispielsweise die Menge des Leim-Auftrags auf diese Material-Bahn einfach veränderbar, was wiederum einen Einfluss auf die in dieser Material-Bahn vorliegende Feuchte hat. Eine Erhöhung der in der zweiten Material-Bahn vorliegenden Feuchte bewirkt eine Krümmung der Wellpappe-Bögen nach oben, also einen Up Warp.

Die in dem Unteranspruch 4 angegebene dritte Material-Vorrats-Vorrichtung ist vorzugsweise als Splice-Vorrichtung ausgeführt.

Es ist von Vorteil, wenn die vierte Material-Vorrats-Vorrichtung als Splice-Vorrichtung ausgebildet ist.

Die erste Wellpappe-Bahn und die zweite Wellpappe-Bahn sind vorzugsweise lagenartig miteinander verbindbar, bevorzugter miteinander verleimbar. Vorzugsweise ist eine weitere Deck-Bahn mit einer freien Well-Bahn der ersten oder zweiten Wellpappe-Bahn verbindbar, bevorzugter verleimbar.

Es ist von Vorteil, wenn die in dem Unteranspruch 5 angegebene zweite Vorheiz-Einrichtung eine zweite Vorheiz-Walze umfasst, an der die dritte Material-Bahn bereichsweise anliegt. Die dritte Material-Bahn wird so von ihrer an der zweiten Vorheiz-Walze anliegenden Seite aus zumindest bereichsweise über deren Dicke vorgeheizt. Die Vorheiz-Temperatur der zweiten Vorheiz-Walze ist veränderbar, was zu einer Veränderung der Krümmung der Wellpappe-Bögen führt. Eine Erhöhung dieser Vorheiz-Temperatur bewirkt eine Krümmung der Wellpappe-Bögen nach unten, also einen Down Warp.

Durch die in dem Unteranspruch 6 angegebene Leim-Auftrags-Einrichtung ist die Beleimung dritten und/oder vierten Material-Bahn veränderbar, was zu einer Veränderung der Krümmung der Wellpappe-Bögen führt. Insbesondere ist die Leim-Auftrags-Menge veränderbar. Alternativ ist die Zusammensetzung, insbesondere die Feuchte, des Leims veränderbar. Es ist von Vorteil, wenn die Leim-Auftrags-Einrichtung eine Leim-Auftrags-Walze umfasst, die Leim auf die an ihr anliegenden Seite der jeweiligen Material-Bahn aufträgt. Durch Verstellung der Leim-Auftrags-Walze gegenüber dieser Material-Bahn ist beispielsweise die Menge des Leim-Auftrags auf diese Material-Bahn einfach veränderbar, was wiederum einen Einfluss auf die in der Material-Bahn vorliegende Feuchte hat. Eine Erhöhung der in der vierten Material-Bahn vorliegenden Feuchte bewirkt eine Krümmung der Wellpappe-Bögen nach oben, also einen Up Warp.

Vorzugsweise hat die Vorheiz-Anordnung gemäß dem Unteranspruch 7 eine der ersten Wellpappe-Bahn zugeordnete Vorheiz-Walze, an der die erste Wellpappe-Bahn bereichsweise außen anliegt und so von ihrer anliegenden Seite aus vorgeheizt wird.

Günstigerweise hat die Vorheiz-Anordnung eine der zweiten Wellpappe-Bahn zugeordnete weitere Vorheiz-Walze, an der die zweite Wellpappe-Bahn bereichsweise außen anliegt und so von ihrer anliegenden Seite aus vorgeheizt wird.

Es ist zweckmäßig, wenn die Vorheiz-Anordnung eine einer Deck-Bahn zugeordnete weitere Vorheiz-Walze umfasst, an der die Deck-Bahn bereichsweise außen anliegt und so von ihrer anliegenden Seite aus vorgeheizt wird.

Die Vorheiz-Temperatur der Vorheiz-Anordnung bei der ersten Wellpappe-Bahn, der zweiten Wellpappe-Bahn und/oder der Deck-Bahn ist veränderbar, was zu einer Veränderung der Krümmung der Wellpappe-Bögen führt. Bevorzugt ist die Vorheiz-Temperatur mindestens einer, bevorzugter sämtlicher, der Vorheiz-Walzen der Vorheiz-Anordnung veränderbar, was zu einer Veränderung der Krümmung der Wellpappe-Bögen führt. Eine Erhöhung der Vorheiz-Temperatur bei der ersten Wellpappe-Bahn bewirkt eine Krümmung der Wellpappe-Bögen nach unten, also einen Down Warp. Eine Erhöhung der Vorheiz-Temperatur bei der zweiten Wellpappe-Bahn bewirkt eine Krümmung der Wellpappe-Bögen nach unten, also einen Down Warp. Eine Erhöhung der Vorheiz-Temperatur bei der Deck-Bahn bewirkt eine Krümmung der Wellpappe-Bögen nach oben, also einen Up Warp.

Vorzugsweise hat das Leim-Werk gemäß dem Unteranspruch 8 eine der ersten Wellpappe-Bahn zugeordnete erste Beleimungs-Einrichtung zur Beleimung der ersten Wellpappe-Bahn.

Günstigerweise hat das Leim-Werk eine der zweiten Wellpappe-Bahn zugeordnete zweite Beleimungs-Einrichtung zur Beleimungs-Einrichtung zur Beleimung der zweiten Wellpappe-Bahn.

Die Beleimung der ersten Wellpappe-Bahn und/oder zweiten Wellpappe-Bahn ist veränderbar, was zu einer Veränderung der Krümmung der Wellpappe-Bögen führt. Insbesondere ist die Leim-Auftrags-Menge veränderbar. Alternativ ist die Zusammensetzung, insbesondere die Feuchte, des Leims veränderbar. Es ist von Vorteil, wenn die erste Beleimungs-Einrichtung eine erste Beleimungs-Walze umfasst, die Leim auf die an ihr anliegenden Seite der jeweiligen Wellpappe-Bahn aufträgt. Günstigerweise hat die zweite Beleimungs-Einrichtung eine zweite Beleimungs-Walze, die Leim auf die an ihr anliegenden Seite der jeweiligen Wellpappe-Bahn aufträgt. Durch Verstellung der ersten und/oder Beleimungs-Walze gegenüber der zugehörigen Wellpappe-Bahn ist beispielsweise die Menge des Leim-Auftrags auf diese Wellpappe-Bahn einfach veränderbar, was wiederum einen Einfluss auf die in der Wellpappe-Bahn vorliegende Feuchte hat. Eine Erhöhung der in der ersten Wellpappe-Bahn vorliegenden Feuchte bewirkt eine Krümmung der Wellpappe-Bögen nach oben, also einen Up Warp. Eine Erhöhung der in der zweiten Wellpappe-Bahn vorliegenden Feuchte bewirkt eine Krümmung der Wellpappe-Bögen nach unten, also einen Down Warp.

Es ist von Vorteil, wenn die Heiz-Andrück-Einrichtung gemäß dem Unteranspruch 9 mindestens ein Heiz-Element umfasst, dessen Heiz-Temperatur veränderbar ist. Durch das mindestens eine Heiz-Element ist die gesamte Wellpappe-Bahn beheizbar. Eine Änderung der Heiz-Temperatur des mindestens einen Heiz-Elements führt zu einer Veränderung der Krümmung der Wellpappe-Bögen. Das mindestens eine Heiz-Element ist benachbart zu der äußeren Wellpappe-Bahn und/oder der Deck-Bahn angeordnet. Bevorzugt ist es nur benachbart zu der Deck-Bahn angeordnet. Eine Erhöhung der Heiz-Temperatur bei der Deck-Bahn bewirkt eine Krümmung der Wellpappe-Bögen nach oben, also einen Up Warp.

Vorzugsweise hat die Heiz-Andrück-Einrichtung mindestens ein Andrück-Element, das insbesondere als umlaufender Andrück-Gurt ausgeführt ist und günstigerweise an die erste Wellpappe-Bahn drückend angreift. Durch das mindestens eine Andrück-Element ist vorzugsweise alternativ oder zusätzlich zu der Heiz-Temperatur-Änderung durch das mindestens eine Heiz-Element die Feuchtigkeit in der ersten Wellpappe-Bahn veränderbar, sodass so auch die Krümmung der Wellpappe-Bögen beeinflussbar ist. Eine Erhöhung der Feuchtigkeit in der ersten Wellpappe-Bahn durch das mindestens eine Andrück-Element bewirkt eine Krümmung der Wellpappe-Bögen nach oben, also einen Up-Warp. Es ist von Vorteil, wenn durch das mindestens eine Andrück-Element die erste Wellpappe-Bahn mit Dampf oder Flüssigkeit, vorzugsweise durch Sprühen, benetzbar ist. Es ist zweckmäßig, wenn in dem mindestens einen Andrück-Element, mindestens eine, bevorzugter eine Vielzahl von, Austritts-Öffnung/en ausgebildet ist, durch die Flüssigkeit bzw. Dampf zu der ersten Wellpappe-Bahn transportierbar ist.

Allgemein gilt, dass eine im Vergleich zu der angegebenen Betätigung umgekehrte Betätigung der Wellpappe-Bogen-Krümmungs-Beeinflussungs-Einrichtungen, wie Reduzierung der Vorheiz-Temperatur oder der in der Bahn vorherrschenden Feuchte, zu einer entsprechenden umgekehrten Krümmung der Wellpappe-Bögen führt.

Durch das Maß der Betätigung der Wellpappe-Bogen-Krümmungs-Beeinflussungs-Einrichtungen ist das Maß der Krümmung der Wellpappe-Bögen beeinflussbar.

Durch gleichzeitige Betätigung mehrerer der Wellpappe-Bogen-Krümmungs-Beeinflussungs-Einrichtungen mit gleichartigem Einfluss auf das Krümmungs-Verhalten der Wellpappe-Bögen ist das Maß der Krümmung der Wellpappe-Bögen steigerbar.

Wenn die Wellpappe-Bögen nach unten gekrümmt sind, also wenn ein Down Warp vorliegt, so sind die quer zu der Transport-Richtung der Wellpappe-Bahn verlaufenden Kanten der Wellpappe-Bögen, die also vorauseilend bzw. nacheilend sind, jeweils im Wesentlichen nach unten gewandt bzw. unterhalb eines zwischen diesen Kanten parallel verlaufenden, zentralen Bereichs des jeweiligen Wellpappe-Bogens angeordnet.

Wenn die Wellpappe-Bögen nach oben gekrümmt sind, also wenn ein Up Warp vorliegt, so sind die quer zu der Transport-Richtung der Wellpappe-Bahn verlaufenden Kanten der Wellpappe-Bögen, die also vorauseilend bzw. nacheilend sind, jeweils im Wesentlichen nach oben gewandt bzw. oberhalb eines zwischen diesen Kanten parallel verlaufenden, zentralen Bereichs des jeweiligen Wellpappe-Bogens angeordnet.

Die in dem Unteranspruch 10 und 11 angegebenen Krümmungs-Detektions-Einrichtungen können konstruktiv unterschiedlich oder identisch sein. Sie stehen vorzugsweise jeweils mit der Informations-Verarbeitungs-Einrichtung in Signal-Verbindung. Die Informations-Verarbeitungs-Einrichtung empfängt günstigerweise von der ersten Krümmungs-Detektions-Einrichtung Krümmungs-Informationen zu den Teil-Wellpappe-Bahnen. Die Informations-Verarbeitungs-Einrichtung empfängt günstigerweise von der zweiten Krümmungs-Detektions-Einrichtung Krümmungs-Informationen zu den Wellpappe-Bögen.

Die Ausgestaltung gemäß dem Unteranspruch 13 führt zu einer äußerst hohen Wellpappe-Bogen-Qualität.

Die Unteransprüche können auch bevorzugte Weiterbildungen des unabhängigen Anspruchs 15 sein.

Nachfolgend wird unter Bezugnahme auf die beigefügte Zeichnung eine bevorzugte Ausführungsform der Erfindung beispielhaft beschrieben. Dabei zeigen:
- Fig. 1: einen ersten Teil einer erfindungsgemäßen Wellpappe-Anlage, und
- Fig. 2: einen zweiten Teil der in Fig. 1 dargestellten erfindungsgemäßen Wellpappe-Anlage.

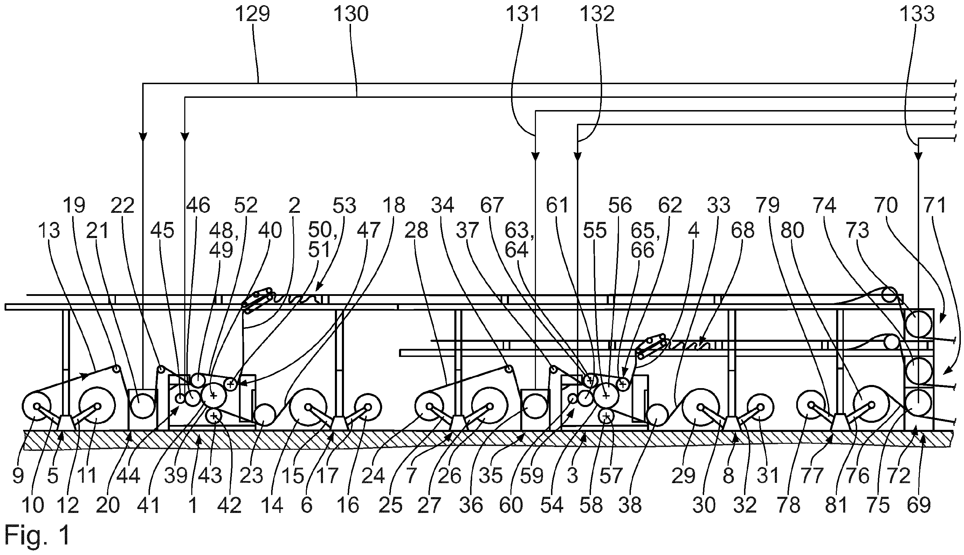

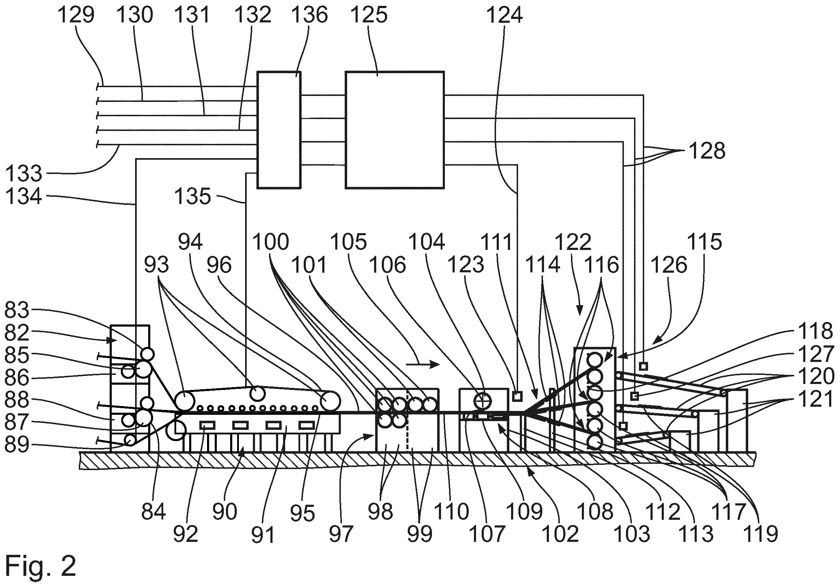

Eine Wellpappe-Anlage, wie sie in den Fig. 1 und 2 schematisch dargestellt ist, umfasst eine erste Wellpappe-Produktions-Vorrichtung 1 zur Herstellung einer einseitig kaschierten, endlosen ersten Wellpappe-Bahn 2 und eine zweite Wellpappe-Produktions-Vorrichtung 3 zur Herstellung einer einseitig kaschierten, endlosen zweiten Wellpappe-Bahn 4.

Der ersten Wellpappe-Produktions-Vorrichtung 1 sind eine erste Splice-Vorrichtung 5 und eine zweite Splice-Vorrichtung 6 zugeordnet, während der zweiten Wellpappe-Produktions-Vorrichtung 3 eine dritte Splice-Vorrichtung 7 und eine vierte Splice-Vorrichtung 8 zugeordnet sind.

Die erste Splice-Vorrichtung 5 umfasst zum Abrollen einer endlichen ersten Material-Bahn von einer ersten Material-Bahn-Rolle 9 eine erste Abroll-Einheit 10 und zum Abrollen einer endlichen zweiten Material-Bahn von einer zweiten Material-Bahn-Rolle 11 eine zweite Abroll-Einheit 12. Die endliche erste und zweite Material-Bahn werden zum Bereitstellen einer endlosen ersten Material-Bahn 13 mittels einer nicht dargestellten Verbinde- und Schneide-Einheit der ersten Splice-Vorrichtung 5 miteinander verbunden. Bei jedem Verbinden der endlichen ersten und zweiten Material-Bahnen miteinander entsteht in der endlosen ersten Material-Bahn 13 eine erste Verbindungs-Naht.

Die zweite Splice-Vorrichtung 6 ist entsprechend der ersten Splice-Vorrichtung 5 ausgebildet. Diese hat zum Abrollen einer endlichen dritten Material-Bahn von einer dritten Material-Bahn-Rolle 14 eine dritte Abroll-Einheit 15 und zum Abrollen einer endlichen vierten Material-Bahn von einer vierten Material-Bahn-Rolle 16 eine vierte Abroll-Einheit 17. Die endliche dritte und vierte Material-Bahn werden zum Bereitstellen einer endlosen zweiten Material-Bahn 18 mittels einer nicht dargestellten Verbinde- und Schneide-Einheit der zweiten Splice-Vorrichtung 6 miteinander verbunden. Bei jedem Verbinden der dritten und vierten Material-Bahnen miteinander entsteht in der endlosen zweiten Material-Bahn 18 eine zweite Verbindungs-Naht.

Die endlose erste Material-Bahn 13 wird vorzugsweise über mindestens eine erste Umlenk-Rolle 19 einer ersten Vorheiz-Einrichtung 20 zugeführt, die eine erste, beheizbare Vorheiz-Walze 21 umfasst. Die endlose erste Material-Bahn 13 liegt bereichsweise außen mit einer Seite an der ersten Vorheiz-Walze 21 an. Die vorgeheizte endlose erste Material-Bahn 13 wird dann vorzugsweise über mindestens eine zweite Umlenk-Rolle 22 der ersten Wellpappe-Produktions-Vorrichtung 1 zugeführt.

Die endlose zweite Material-Bahn 18 wird vorzugsweise über mindestens eine dritte Umlenk-Rolle 23 der ersten Wellpappe-Produktions-Vorrichtung 1 zugeführt.

Die dritte Splice-Vorrichtung 7 ist entsprechend der ersten Splice-Vorrichtung 5 ausgebildet. Diese umfasst zum Abrollen einer endlichen fünften Material-Bahn von einer fünften Material-Bahn-Rolle 24 eine fünfte Abroll-Einheit 25 und zum Abrollen einer endlichen sechsten Material-Bahn von einer sechsten Material-Bahn-Rolle 26 eine sechste Abroll-Einheit 27. Die endliche fünfte und sechste Material-Bahn werden zum Bereitstellen einer endlosen dritten Material-Bahn 28 mittels einer nicht dargestellten Verbinde- und Schneid-Einheit der dritten Splice-Einrichtung 7 miteinander verbunden. Bei jedem Verbinden der fünften und sechsten Material-Bahnen miteinander entsteht in der endlosen dritten Material-Bahn 28 eine dritte Verbindungs-Naht.

Die vierte Splice-Vorrichtung 8 ist im Wesentlichen entsprechend der zweiten Splice-Vorrichtung 6 ausgebildet. Diese umfasst zum Abrollen einer endlichen siebten Material-Bahn von einer siebten Material-Bahn-Rolle 29 eine siebte Abroll-Einheit 30 und zum Abrollen einer endlichen achten Material-Bahn von einer achten Material-Bahn-Rolle 31 eine achte Abroll-Einheit 32. Die endliche siebte und achte Material-Bahn werden zum Bereitstellen einer endlosen vierten Material-Bahn 33 mittels einer nicht dargestellten Verbinde- und Schneid-Einheit der vierten Splice-Vorrichtung 8 miteinander verbunden. Bei jedem Verbinden der siebten und achten Material-Bahnen miteinander entsteht in der endlosen vierten Material-Bahn 33 eine vierte Verbindungs-Naht.

Die endlose dritte Material-Bahn 28 wird vorzugsweise über mindestens eine vierte Umlenk-Rolle 34 einer zweiten Vorheiz-Einrichtung 35 zugeführt, die eine zweite beheizbare Vorheiz-Walze 36 umfasst. Die endlose dritte Material-Bahn 28 liegt mit einer Seite bereichsweise außen an der zweiten Vorheiz-Walze 36 an und wird so von dieser Seite aus beheizt. Die beheizte endlose dritte Material-Bahn 28 wird dann vorzugsweise über mindestens eine fünfte Umlenk-Rolle 37 der zweiten Wellpappe-Produktions-Vorrichtung 3 zugeführt.

Die erste Vorheiz-Einrichtung 20 und die zweite Vorheiz-Einrichtung 35 sind unabhängig voneinander temperierbar bzw. aufheizbar. Die Vorheiz-Temperatur deren Vorheiz-Walzen 21, 36 ist veränderbar.

Die endlose vierte Material-Bahn 33 wird vorzugsweise über mindestens eine sechste Umlenk-Rolle 38 der zweiten Wellpappe-Produktions-Vorrichtung 3 zugeführt.

Die erste Wellpappe-Produktions-Vorrichtung 1 umfasst zum Erzeugen einer eine Wellung aufweisenden endlosen Well-Bahn 39 aus der endlosen zweiten Material-Bahn 18 eine um eine erste Dreh-Achse 40 drehbar gelagerte erste Riffel-Walze 41 und eine um eine zweite Dreh-Achse 42 drehbar gelagerte zweite Riffel-Walze 43. Die Riffel-Walzen 41, 43 bilden zum Durchführen und Riffeln der endlosen zweiten Material-Bahn 18 einen Walzen-Spalt aus, wobei die Dreh-Achsen 40, 42 parallel zueinander verlaufen. Die Riffel-Walzen 41, 43 bilden zusammen eine erste Riffel-Einrichtung.

Zum Verbinden der ersten Well-Bahn 39 mit der endlosen ersten Material-Bahn 13 zu der einseitig kaschierten, ersten Wellpappe-Bahn 2 weist die erste Wellpappe-Produktions-Vorrichtung 1 eine erste Leim-Auftrags-Einrichtung 44 auf, die wiederum eine erste Leim-Dosierungs-Walze 45, einen ersten Leim-Behälter (nicht dargestellt) und eine erste Leim-Auftrags-Walze 46 umfasst. Zum Durchführen und Beleimen der endlosen ersten Well-Bahn 39 bildet die erste Leim-Auftrags-Walze 46 mit der ersten Riffel-Walze 41 einen Leim-Spalt aus, wobei die erste Leim-Auftrags-Walze 46 teilweise innerhalb des ersten Leim-Behälters angeordnet ist bzw. in diesen eintaucht. Der Leim aus dem Leim-Behälter wird auf Spitzen der Wellung der ersten Well-Bahn 39 aufgetragen. Die erste Leim-Dosierungs-Walze 45 liegt gegen die erste Leim-Auftrags-Walze 46 an und dient zum Ausbilden einer gleichmäßigen Leim-Schicht auf der ersten Leim-Auftrags-Walze 46. Die erste Leim-Auftrags-Walze 46 ist gegenüber der ersten Riffel-Walze 41 verstellbar, so dass der zwischen diesen vorliegende Leim-Spalt veränderbar ist. Eine Veränderung des Leim-Spalts führt zu einer Änderung der überführten Leim-Menge von dem ersten Leim-Behälter auf die erste Well-Bahn 39.

Die endlose erste Material-Bahn 13 wird anschließend mit der mit Leim versehenen ersten Well-Bahn 39 in der ersten Wellpappe-Produktions-Vorrichtung 1 zusammengefügt.

Zum Anpressen der endlosen ersten Material-Bahn 13 gegen die mit Leim versehene, erste Well-Bahn 39, die wiederum bereichsweise an der ersten Riffel-Walze 41 anliegt, hat die erste Wellpappe-Produktions-Vorrichtung 1 ein erstes Anpress-Band-Modul 47. Das erste Anpress-Band-Modul 47 ist oberhalb der ersten Riffel-Walze 41 angeordnet. Es hat eine um eine dritte Dreh-Achse 48 drehbar gelagerte erste Anpress-Walze 49 und eine um eine vierte Dreh-Achse 50 drehbar gelagerte zweite Anpress-Walze 51 sowie ein endloses Anpress-Band 52, das um die Anpress-Walzen 49, 51 herumgeführt ist.

Die erste Riffel-Walze 41 greift in einen zwischen den Anpress-Walzen 49, 51 vorliegenden Raum bereichsweise von unten ein. Das Anpress-Band 52 wird dabei durch die erste Riffel-Walze 41 umgelenkt. Es drückt gegen die endlose erste Material-Bahn 13, die wiederum gegen die mit Leim versehene, an der ersten Riffel-Walze 41 anliegende erste Well-Bahn 39 gepresst wird.

Zum Zwischenspeichern und Puffern der einseitig kaschierten ersten Wellpappe-Bahn 2 wird diese einer ersten Speicher-Einrichtung 53 zugeführt, wo diese Schleifen aufweist.

Die zweite Wellpappe-Produktions-Vorrichtung 3 ist identisch zu der ersten Wellpappe-Produktions-Vorrichtung 1 ausgebildet. Die zweite Wellpappe-Produktions-Vorrichtung 3 umfasst zum Erzeugen einer eine Wellung aufweisenden endlosen zweiten Well-Bahn 54 aus der endlosen vierten Material-Bahn 33 eine um eine fünfte Dreh-Achse 55 drehbar gelagerte dritte Riffel-Walze 56 und eine um eine sechste Dreh-Achse 57 drehbar gelagerte vierte Riffel-Walze 58. Die dritte Riffel-Walze 56 und die vierte Riffel-Walze 58 bilden zum Durchführen und Riffeln der endlosen vierten Material-Bahn 33 einen Walzen-Spalt aus, wobei die fünfte Dreh-Achse 55 und die sechste Dreh-Achse 57 parallel zueinander verlaufen. Die dritte Riffel-Walze 56 und die vierte Riffel-Walze 58 bilden zusammen eine Riffel-Einrichtung.

Zum Verbinden der endlosen zweiten Well-Bahn 54 mit der endlosen dritten Material-Bahn 28 zu der einseitig kaschierten, zweiten Wellpappe-Bahn 4 weist die zweite Wellpappe-Produktions-Vorrichtung 3 eine zweite Leim-Auftrags-Einrichtung 59 auf, die wiederum eine zweite Leim-Dosierungs-Walze 60, einen zweiten Leim-Behälter (nicht dargestellt) und eine zweite Leim-Auftrags-Walze 61 umfasst. Zum Durchführen und Beleimen der endlosen zweiten Well-Bahn 54 bildet die zweite Leim-Auftrags-Walze 61 mit der dritten Riffel-Walze 56 einen Leim-Spalt aus, wobei die zweite Leim-Auftrags-Walze 61 teilweise innerhalb des zweiten Leim-Behälters angeordnet ist bzw. in diesen eintaucht. Der Leim aus dem zweiten Leim-Behälter wird auf Spitzen der Wellung der zweiten Well-Bahn 54 aufgetragen. Die zweite Leim-Dosierungs-Walze 60 liegt gegen die zweite Leim-Auftrags-Walze 61 an und dient zum Ausbilden einer gleichmäßigen Leim-Schicht auf der zweiten Leim-Auftrags-Walze 61. Die zweite Leim-Auftrags-Walze 61 ist gegenüber der dritten Riffel-Walze 56 verstellbar, so dass der Leim-Spalt zwischen diesen veränderbar ist. Eine Veränderung des Leim-Spalts führt zu einer Änderung der überführten Leim-Menge von dem zweiten Leim-Behälter auf die zweite Well-Bahn 54.

Die endlose dritte Material-Bahn 28 wird anschließend mit der mit Leim aus dem zweiten Leim-Behälter versehenen zweiten Well-Bahn 54 in der zweiten Wellpappe-Produktions-Vorrichtung 3 zusammengefügt.

Zum Anpressen der endlosen dritten Material-Bahn 28 gegen die mit Leim versehene, zweite Well-Bahn 54, die wiederum bereichsweise an der dritten Riffel-Walze 56 anliegt, hat die zweite Wellpappe-Produktions-Vorrichtung 3 ein zweites Anpress-Band-Modul 62. Das zweite Anpress-Band-Modul 62 ist oberhalb der dritten Riffel-Walze 56 angeordnet. Es hat eine um eine siebte Dreh-Achse 63 drehbar gelagerte dritte Anpress-Walze 64 und eine um eine achte Dreh-Achse 65 drehbar gelagerte vierte Anpress-Walze 66 sowie ein zweites Anpress-Band 67, das um die dritte Anpress-Walze 64 und die vierte Anpress-Walze 66 herumgeführt ist.

Die dritte Riffel-Walze 56 greift von unten in einen zwischen der dritten Anpress-Walze 64 und der vierten Anpress-Walze 66 vorliegenden Raum bereichsweise ein. Das zweite Anpress-Band 67 wird dabei durch die dritte Riffel-Walze 56 umgelenkt. Es drückt gegen die endlose dritte Material-Bahn 28, die wiederum gegen die mit Leim versehene, an der dritten Riffel-Walze 56 anliegende zweite Well-Bahn 54 gepresst wird.

Zum Zwischenspeichern und Puffern der einseitig kaschierten zweiten Wellpappe-Bahn 4 wird diese einer zweiten Speicher-Einrichtung 68 zugeführt, wo diese Schleifen aufweist.

Stromabwärts zu den Speicher-Einrichtungen 53, 68 befindet sich eine Vorheiz-Anordnung 69, die eine dritte, vierte und fünfte Vorheiz-Einrichtung 70, 71 bzw. 72 umfasst. Die dritte, vierte und fünfte Vorheiz-Einrichtung 70, 71 bzw. 72 sind übereinander angeordnet. Die vierte Vorheiz-Einrichtung 71 ist zwischen den Vorheiz-Einrichtungen 70, 72 angeordnet.

Die dritte Vorheiz-Einrichtung 70 hat eine dritte beheizbare Vorheiz-Walze 73, während die vierte Vorheiz-Einrichtung 71 eine vierte beheizbare Vorheiz-Walze 74 hat. Die fünfte Vorheiz-Einrichtung 72 hat eine fünfte beheizbare Vorheiz-Walze 75. Die Vorheiz-Walzen 73, 74, 75 sind unabhängig voneinander temperierbar bzw. aufheizbar. Die Vorheiz-Temperatur der Vorheiz-Walzen 73, 74, 75 ist also veränderbar.

Die erste Wellpappe-Bahn 2 wird der dritten Vorheiz-Einrichtung 70 zugeführt und liegt bereichsweise mit einer Seite an der dritten Vorheiz-Walze 73 an. Die zweite Wellpappe-Bahn 4 wird der vierten Vorheiz-Einrichtung 71 zugeführt und liegt bereichsweise mit einer Seite an der vierten Vorheiz-Walze 74 an. Eine endlose Deck-Bahn 76 wird der fünften Vorheiz-Einrichtung 72 zugeführt und liegt mit einer Seite bereichsweise an der fünften Vorheiz-Walze 75 an.

Eine fünfte Splice-Vorrichtung 77 umfasst zum Abrollen einer endlichen neunten Material-Bahn von einer neunten Material-Bahn-Rolle 78 eine neunte Abroll-Einheit 79 und zum Abrollen einer endlichen zehnten Material-Bahn von einer zehnten Material-Bahn-Rolle 80 eine zehnte Abroll-Einheit 81. Die endliche neunte Material-Bahn und zehnte Material-Bahn werden zum Bereitstellen der endlosen Deck-Bahn 76 mittels einer nicht dargestellten Verbinde- und Schneide-Einheit der fünften Splice-Vorrichtung 77 miteinander verbunden. Bei jedem Verbinden der endlichen neunten und zehnten Material-Bahnen miteinander entsteht in der endlosen Deck-Bahn 76 eine Verbindungs-Naht.

Stromabwärts zu der Vorheiz-Anordnung 69 befindet sich ein Leim-Werk 82, das eine erste Beleimungs-Einrichtung 83 und eine zweite Beleimungs-Einrichtung 84 umfasst und in Fig. 2 dargstellt ist. Die erste Beleimungs-Einrichtung 83 hat eine erste Beleimungs-Walze 85, die in ein erstes Leim-Bad 86 eintaucht und Leim aus dem ersten Leim-Bad 86 auf die vorbeheizte erste Wellpappe-Bahn 2 überführt. Die erste Beleimungs-Walze 85 ist derart verstellbar, dass die auf die erste Wellpappe-Bahn 2 überführte bzw. überführbare Leim-Menge veränderbar ist.

Die zweite Beleimungs-Einrichtung 84 hat eine zweite Beleimungs-Walze 87, die in ein zweites Leim-Bad 88 eintaucht und Leim aus dem zweiten Leim-Bad 88 auf die vorbeheizte zweite Wellpappe-Bahn 4 überführt. Die zweite Beleimungs-Walze 87 ist derart verstellbar, dass die auf die zweite Wellpappe-Bahn 4 überführte bzw. überführbare Leim-Menge veränderbar ist. Die erste Beleimungs-Walze 85 und die zweite Beleimungs-Walze 87 sind unabhängig voneinander verstellbar.

Die Deck-Bahn 76 wird in dem Leim-Werk 82 über eine siebte Umlenk-Rolle 89 geführt. Die zweite Beleimungs-Einrichtung 84 ist zwischen der ersten Beleimungs-Einrichtung 83 und der siebten Umlenk-Rolle 89 angeordnet.

Stromabwärts zu dem Leim-Werk 82 ist eine Heiz-Andrück-Einrichtung 90 angeordnet. Die Heiz-Andrück-Einrichtung 90 umfasst einen sich horizontal erstreckenden Tisch 91 mit Heiz-Elementen 92. Die Heiz-Temperatur der Heiz-Elemente 92 ist veränderbar. Oberhalb des Tisches 91 hat die Heiz-Andrück-Einrichtung 90 einen über Walzen 93 umgelenkten, angetriebenen, endlosen Andrück-Gurt 94. Durch den Andrück-Gurt 94 ist die erste Wellpappe-Bahn 2 mit Dampf besprühbar. Zwischen dem Andrück-Gurt 94 und dem Tisch 91 ist ein Anpress-Spalt 95 gebildet, durch den die beleimte erste Wellpappe-Bahn 2, die beleimte zweite Wellpappe-Bahn 4 und die Deck-Bahn 76 geführt und dort aneinander gedrückt werden. Die Heiz-Elemente 92 sind benachbart zu der Deck-Bahn 76 angeordnet, während der Andrück-Gurt 94 benachbart zu der ersten Wellpappe-Bahn 2 angeordnet ist. In der Heiz-Andrück-Einrichtung 90 wird eine fünflagige endlose Wellpappe-Bahn 96 gebildet.

Stromabwärts zu der Heiz-Andrück-Einrichtung 90 hat die Wellpappe-Anlage eine Längs-Schneide-Rill-Einrichtung 97. Die Längs-Schneide-Rill-Einrichtung 97 umfasst eingangsseitig zwei hintereinander angeordnete Rill-Stationen 98 sowie zwei hintereinander angeordnete Längs-Schneide-Stationen 99.

Die Rill-Stationen 98 weisen jeweils paarweise übereinander angeordnete Rill-Werkzeuge 100 auf, zwischen denen die fünflagige Wellpappe-Bahn 96 durchgeführt wird.

Die Längs-Schneide-Stationen 99 weisen jeweils drehantreibbare Messer 101 auf, die mit der fünflagigen Wellpappe-Bahn 96 zur Längs-Durchtrennung derselben in Eingriff bringbar sind. Die Messer 101 wirken mit gegenüberliegend angeordneten, drehangetriebenen, nicht dargestellten Bürsten-Walzen zusammen, wenn die Messer 101 in die fünflagige Wellpappe-Bahn 96 eingetaucht sind. Durch die Längs-Schneide-Stationen 99 ist die bislang noch ungeteilte fünflagige Wellpappe-Bahn 96 in mehrere endlose Teil-Wellpappe-Bahnen 110 teilbar, die in einer Transport-Richtung 105 gefördert werden und sich anfangs nebeneinander befinden.

Stromabwärts zu der Längs-Schneide-Rill-Einrichtung 97 ist eine Kurz-Quer-Schneide-Vorrichtung 102 angeordnet. Die Kurz-Quer-Schneide-Vorrichtung 102 hat ein Gehäuse 103, in dem eine Walze 104 um eine senkrecht zu der Transport-Richtung 105 der Wellpappe-Bahn 96 verlaufende Dreh-Achse 106 gelagert ist. Das Gehäuse 103 der Kurz-Quer-Schneide-Vorrichtung 102 ist derart ausgestaltet, dass die fünflagige Wellpappe-Bahn 96 unterhalb der drehangetriebenen Walze 104 durch die Kurz-Quer-Schneide-Vorrichtung 102 transportierbar ist. An der Walze 104 ist ein sich nach radial außen erstreckendes Messer 107 angeordnet, das sich senkrecht zu der Transport-Richtung 105 über die gesamte Breite der fünflagigen Wellpappe-Bahn 96 erstreckt.

Unterhalb der fünflagigen Wellpappe-Bahn 96 sind in dem Gehäuse 103 mehrere Auflage-Einrichtungen 108 senkrecht zu der Transport-Richtung 105 nebeneinander angeordnet. Jede Auflage-Einrichtung 108 umfasst eine auch als Amboss bezeichnete Schneid-Auflage 109, die an einer Kolben-Stange eines Hydraulik-Zylinders (nicht dargestellt) befestigt ist. Die Kolben-Stange ist in einem Gehäuse des Hydraulik-Zylinders in der Transport-Richtung 105 verschiebbar. Das Gehäuse des Hydraulik-Zylinders ist an seinem der Kolben-Stange abgewandten Ende an dem Gehäuse 103 der Kurz-Quer-Schneide-Vorrichtung 102 befestigt. Jede Schneid-Auflage 109 kann mittels des zugehörigen Hydraulik-Zylinders in eine erste und zweite Position bewegt werden. In der ersten Position, die die Schneid-Position ist, befindet sich die Schneid-Auflage 109 direkt unterhalb der Walze 104. Der vertikale Abstand der Walze 104 zu der Schneid-Auflage 109 ist dabei derart gewählt, dass das Messer 107 bei Rotation der Walze 104 um die Dreh-Achse 106 gerade nicht die Schneid-Auflage 109 berührt. In der zweiten Position, die die Nicht-Schneid-Position ist, ist die Kolben-Stange des Hydraulik-Zylinders voll ausgefahren, so dass sich die Schneid-Auflage 109 in der Transport-Richtung 105 vor der Walze 104 befindet. Die Kurz-Quer-Schneide-Vorrichtung 102 dient einerseits zum sicheren Entfernen von Anfahr-Abfall und andererseits Durchführung von Auftrags- bzw. Format-Wechseln. Mit der Kurz-Quer-Schneide-Vorrichtung 102 sind bei einem Format-Wechsel senkrecht bzw. schräg zu der Transport-Richtung 105 verlaufende Verbindungs-Schnitte erzeugbar, die die jeweiligen durch die Längs-Schneide-Stationen 99 erzeugten Längs-Schnitte verbinden, sodass die Teil-Wellpappe-Bahnen 110 vorzugsweise endlos bleiben.

Stromabwärts zu der Kurz-Quer-Schneide-Vorrichtung 102 ist eine Weiche 111 angeordnet, die zum Antransportieren der Teil-Wellpappe-Bahnen 110 einen Zuführ-Tisch 112 und zum Abtransportieren der Teil-Wellpappe-Bahnen 110 in drei Ebenen eine Abführ-Tisch-Einheit 113 mit drei Abführ-Tischen 114 umfasst. Zur besseren Überführung der Teil-Wellpappe-Bahnen 110 von dem Zuführ-Tisch 112 auf die Abführ-Tische 114 sind vorzugsweise mehrere Weichen-Elemente vorhanden, die nebeneinander quer zu der Transport-Richtung 105 schwenkbar an dem Zuführ-Tisch 112 angeordnet sind und relativ zu den Abführ-Tischen 114 in entsprechende Winkel-Positionen verschwenkbar sind. Eine andere Anzahl von Abführ-Tisch-Einheiten 113 ist alternativ möglich.

Stromabwärts zu der Weiche 111 ist eine Quer-Schneide-Vorrichtung 115 vorgesehen, die drei übereinander angeordnete Teil-Quer-SchneideEinrichtungen 116 aufweist. Jede Teil-Quer-Schneide-Einrichtung 116 umfasst zwei drehantreibbare, paarweise übereinander angeordnete, sich quer zu der Transport-Richtung 105 erstreckende Quer-Schneide-Walzen 117. Jede Quer-Schneide-Walze 117 hat ein sich radial nach außen erstreckendes Quer-Schneide-Messer 118 zur vollständigen Quer-Durchtrennung der Teil-Wellpappe-Bahnen 110 und somit zum Erzeugen von Wellpappe-Bögen 119. Die Quer-Schneide-Messer 118 von jeder Teil-Quer-Schneide-Einrichtung 116 wirken zum Quer-Durchtrennen der Teil-Wellpappe-Bahnen 110 zusammen und sind entsprechend angetrieben.

Stromabwärts zu jeder Teil-Quer-Schneide-Einrichtung 116 ist ein Förder-Band 120 angeordnet, um die zugeschnittenen Wellpappe-Bögen 119 Stapel-Ablage-Vorrichtungen 121 zuzuführen. Jedem Förder-Band 120 ist dabei eine Stapel-Ablage-Vorrichtung 121 zugeordnet.

Die Wellpappe-Anlage umfasst außerdem eine Krümmungs-Detektions-Vorrichtung 122 zum Detektieren der Krümmung der Teil-Wellpappe-Bahnen 110 und der Wellpappe-Bögen 119.

Die Krümmungs-Detektions-Vorrichtung 122 wiederum hat dafür eine erste Krümmungs-Detektions-Einrichtung 123, die stromaufwärts zu der Quer-Schneide-Vorrichtung 115 angeordnet ist und sich quer zu der Transport-Richtung 105 über die gesamte Breite der Teil-Wellpappe-Bahnen 110 erstreckt. Genauer betrachtet ist diese zwischen der Längs-Schneide-Rill-Einrichtung 97 und der Quer-Schneide-Vorrichtung 115 angeordnet. Noch genauer betrachtet ist diese zwischen der Kurz-Quer-Schneide-Vorrichtung 102 und der Quer-Schneide-Vorrichtung 115 angeordnet. Genauer betrachtet ist die erste Krümmungs-Detektions-Einrichtung 123 zwischen der Kurz-Quer-Schneide-Vorrichtung 102 und der Weiche 111 angeordnet. Sie ist vorzugsweise zumindest in der Transport-Richtung 105 unbeweglich.

Die erste Krümmungs-Detektions-Einrichtung 123 ist imstande, die Krümmung der Teil-Wellpappe-Bahnen 110 zu detektieren. Dafür umfasst diese beispielsweise einen ersten Krümmungs-Detektions-Sensor, der oberhalb oder unterhalb der Teil-Wellpappe-Bahnen 110 angeordnet ist. Alternativ sind zwei Krümmungs-Detektions-Sensoren vorhanden, die gegenüberliegend zueinander angeordnet sind. Die Teil-Wellpappe-Bahnen 110 laufen dann jeweils zwischen diesen hindurch.

Die erste Krümmungs-Detektions-Einrichtung 123 ist insbesondere imstande, die Krümmung der Teil-Wellpappe-Bahnen 110 in der Transport-Richtung 105 und/oder quer zu dieser nach oben und/oder nach unten gegenüber einer Ebene bzw. deren Erstreckung in einer Ebene zu detektieren.

Die erste Krümmungs-Detektions-Einrichtung 123 steht über eine erste Signal-Leitung 124 mit einer Informations-Verarbeitungs-Einrichtung 125 in Signal-Verbindung. Über die erste Signal-Leitung 124 werden der Informations-Verarbeitungs-Einrichtung 125 Krümmungs-Informationen zu den einzelnen Teil-Wellpappe-Bahnen 110 zugeführt.

Ferner hat die Krümmungs-Detektions-Vorrichtung 122 eine zweite Krümmungs-Detektions-Einrichtung 126, die stromabwärts zu der Quer-Schneide-Vorrichtung 115 angeordnet ist. Genauer betrachtet ist diese zwischen der Quer-Schneide-Vorrichtung 115 und den Stapel-Ablage-Vorrichtungen 121 angeordnet.

Die zweite Krümmungs-Detektions-Einrichtung 126 wiederum weist drei zweite Krümmungs-Detektions-Einheiten 127 auf. Jedem Förder-Band 120 ist dabei eine Krümmungs-Detektions-Einheit 127 zugeordnet. Jede Krümmungs-Detektions-Einheit 127 kann einen Krümmungs-Detektions-Sensor umfassen, der oberhalb oder unterhalb des jeweiligen Förder-Bands 120 angeordnet ist und vorzugsweise zumindest in dessen Förder-Richtung unbeweglich ist. Alternativ hat jede Krümmungs-Detektions-Einheit 127 zwei Krümmungs-Detektions-Sensoren, die oberhalb und unterhalb des jeweiligen Förder-Bands 120 paarweise angeordnet sind und die Krümmung der auf diesen geförderten Wellpappe-Bögen 119 detektieren.

Die Krümmungs-Detektions-Einheiten 127 sind imstande, die Krümmung der Wellpappe-Bögen 119 in deren jeweiligen Transport-Richtungen und/oder quer zu diesen nach oben und/oder nach unten gegenüber einer jeweiligen Ebene bzw. deren Erstreckung in einer Ebene zu detektieren.

Jede Krümmungs-Detektions-Einheit 127 steht über eine zweite Signal-Leitung 128 mit der Informations-Verarbeitungs-Einrichtung 125 in Signal-Verbindung. Über die zweiten Signal-Leitungen 128 sind jeweils Krümmungs-Informationen zu den Wellpappe-Bögen 119 der Informations-Verarbeitungs-Einrichtung 125 zuführbar.

Die Informations-Verarbeitungs-Einrichtung 125 ist insbesondere imstande, Soll-Werte für die Wellpappe-Bahnen 2, 4, 96 bzw. für die Teil-Wellpappe-Bahnen 110, insbesondere die Vorheiz-Temperatur der ersten Vorheiz-Walze 21, die Vorheiz-Temperatur der zweiten Vorheiz-Walze 36, die Vorheiz-Temperatur der dritten Vorheiz-Walze 73, die Vorheiz-Temperatur der vierten Vorheiz-Walze 74, die Vorheiz-Temperatur der fünften Vorheiz-Walze 75, die Heiz-Temperatur der Heiz-Elemente 92, die Dampf-Zuführung durch den Andrück-Gurt 94, den Leim-Spalt bei der ersten Wellpappe-Produktions-Vorrichtung 1 und/oder den Leim-Spalt bei der zweiten Wellpappe-Produktions-Vorrichtung 3 zu ändern bzw. zu korrigieren.

Dafür steht die Informations-Verarbeitungs-Einrichtung 125 über eine dritte Signal-Leitung 129 mit der ersten Vorheiz-Einrichtung 20 in Signal-Verbindung, um die Vorheiz-Temperatur deren Vorheiz-Walze 21 gegebenenfalls zur Beeinflussung der Krümmung der Wellpappe-Bögen 119 zu ändern.

Die Informations-Verarbeitungs-Einrichtung 125 steht über eine vierte Signal-Leitung 130 mit der ersten Leim-Auftrags-Einrichtung 44 der ersten Wellpappe-Produktions-Einrichtung 1 in Signal-Verbindung, um deren Leim-Auftrags-Walze 46 gegebenenfalls zu verstellen und so den Leim-Auftrag, insbesondere die Leim-Auftrags-Menge, zu verändern, um die Krümmung der Wellpappe-Bögen 119 zu beeinflussen.

Die Informations-Verarbeitungs-Einrichtung 125 steht über eine fünfte Signal-Leitung 131 mit der zweiten Vorheiz-Einrichtung 35 in Signal-Verbindung, um die Vorheiz-Temperatur deren Vorheiz-Walze 36 gegebenenfalls zur Beeinflussung der Krümmung der Wellpappe-Bögen 119 zu ändern.

Die Informations-Verarbeitungs-Einrichtung 125 steht über eine sechste Signal-Leitung 132 mit der zweiten Leim-Auftrags-Einrichtung 59 der zweiten Wellpappe-Produktions-Vorrichtung 3 in Signal-Verbindung, um deren Leim-Auftrags-Walze 61 gegebenenfalls zu verstellen und so den Leim-Auftrag, insbesondere die Leim-Auftrags-Menge zu ändern, um die Krümmung der Wellpappe-Bögen 119 zu beeinflussen.

Die Informations-Verarbeitungs-Einrichtung 125 steht ferner über eine siebte Signal-Leitung 133 mit der dritten Vorheiz-Einrichtung 70, der vierten Vorheiz-Einrichtung 71 und der vierten Vorheiz-Einrichtung 72 in Signal-Verbindung, um die Vorheiz-Temperaturen von deren Vorheiz-Walzen 73, 74 bzw. 75 unabhängig voneinander gegebenenfalls zu ändern, um die Krümmung der Wellpappe-Bögen 119 zu beeinflussen.

Die Informations-Verarbeitungs-Einrichtung 125 steht über eine achte Signal-Leitung 134 mit der ersten Beleimungs-Einrichtung 83 und der zweiten Beleimungs-Einrichtung 84 in Signal-Verbindung, um gegebenenfalls die Position von deren Beleimungs-Walzen 85 bzw. 87 und so die Beleimung der ersten bzw. zweiten Wellpappe-Bahn 2, 4 zu ändern, um die Krümmung der Wellpappe-Bögen 119 zu beeinflussen.

Die Informations-Verarbeitungs-Einrichtung 125 steht über eine neunte Signal-Leitung 135 mit der Heiz-Andrück-Einrichtung 90 in Signal-Verbindung, um gegebenenfalls die Heiz-Temperatur von deren Heiz-Elementen 92 und/oder die Dampf-Zuführung durch den Andrück-Gurt 94 zu ändern, um die Krümmung der Wellpappe-Bögen 119 zu beeinflussen.

Zum Beeinflussen der Krümmung der Wellpappe-Bögen 119 wird mindestens eine der Wellpappe-Bogen-Krümmungs-Beeinflussungs-Einrichtungen 20, 35, 44, 59, 69, 82, 90 über die jeweilige Signal-Leitung 124, 128 bis 135 entsprechend betätigt.

Die Informations-Verarbeitungs-Einrichtung 125 speichert eine von der ersten Krümmungs-Detektions-Einrichtung 123 detektierte Krümmung der Teil-Wellpappe-Bahnen 110 bzw. Krümmungs-Informationen zu diesen und auch eine von der zweiten Krümmungs-Detektions-Einrichtung 126 detektierte Krümmung der Wellpappe-Bögen 119 bzw. Krümmungs-Informationen zu diesen, wenn die Informations-Verarbeitungs-Einrichtung 125 eine Abweichung der Krümmung der Wellpappe-Bögen 119 bei der zweiten Krümmungs-Detektions-Einrichtung 126 von einer Soll-Krümmung der Wellpappe-Bögen 119 feststellt.

Die Informations-Verarbeitungs-Einrichtung 125 unterbricht bei einer Veränderung der Krümmung der Teil-Wellpappe-Bahnen 110 an der ersten Krümmungs-Detektions-Einrichtung 123 durch mindestens eine der Wellpappe-Bogen-Krümmungs-Beeinflussungs-Einrichtungen 20, 35, 44, 59, 69, 82, 90 eine Regelung der Krümmung der Wellpappe-Bögen 119.

Die Informations-Verarbeitungs-Einrichtung 125 vergleicht dann an der zweiten Krümmungs-Detektions-Einrichtung 126 die Ist-Krümmung der Wellpappe-Bögen 119 mit der Soll-Krümmung der Wellpappe-Bögen 119. Die Informations-Verarbeitungs-Einrichtung 125 wiederholt dies, bis die Ist-Krümmung der Wellpappe-Bögen 119 der Soll-Krümmung der Wellpappe-Bögen 119 entspricht.

Bei einer detektierten Veränderung der Krümmung der Teil-Wellpappe-Bahnen 110 an der ersten Krümmungs-Detektions-Einrichtung 123 veranlasst die Informations-Verarbeitungs-Einrichtung 125 sofort eine Veränderung der Krümmung der Wellpappe-Bögen 119 durch mindestens eine der Wellpappe-Bogen-Krümmungs-Beeinflussungs-Einrichtungen 20, 35, 44, 59, 69, 82, 90.

Die Informations-Verarbeitungs-Einrichtung 125 speichert die Krümmungs-Tendenz von der ersten Krümmungs-Detektions-Einrichtung 123 zu der zweiten Krümmungs-Detektions-Einrichtung 126 ab, um die Regel-Strecke auf die erste Krümmungs-Detektions-Einrichtung 123 zu verkürzen.

Es ist von Vorteil, wenn die Informations-Verarbeitungs-Einrichtung 125 eine speicherprogrammierbare Steuerung 136 umfasst, die die Heiz-, Vorheiz-Temperaturen bzw. den Leim-Auftrag steuert.

Es ist von Vorteil, wenn die Informations-Verarbeitungs-Einrichtung 125 eine Benutzer-Schnittstelle umfasst. Die Benutzer-Schnittstelle erlaubt einen Eingriff in die Regelung der Wellpappe-Anlage bzw. der Krümmung der Wellpappe-Bögen 119.

## Patentansprüche

1. Wellpappe-Anlage zur Herstellung von Wellpappe-Bögen (119), umfassend
a. eine erste Material-Vorrats-Vorrichtung (5) zum Abgeben einer ersten Material-Bahn (13),
b. eine zweite Material-Vorrats-Vorrichtung (6) zum Abgeben einer zweiten Material-Bahn (18),
c. eine erste Wellpappe-Produktions-Vorrichtung (1) zum Erzeugen einer mindestens einseitig kaschierten ersten Wellpappe-Bahn (2) aus mindestens der ersten Material-Bahn (13) und der zweiten Material-Bahn (18),
d. eine Quer-Schneide-Vorrichtung (115) zum Erzeugen von Wellpappe-Bögen (119) aus mindestens der mindestens einseitig kaschierten ersten Wellpappe-Bahn (2),
e. eine Krümmungs-Detektions-Vorrichtung (122) zum Detektieren einer Krümmung der Wellpappe-Bögen (119) und/oder von Teil-Wellpappe-Bahnen (110) aus mindestens der mindestens einseitig kaschierten ersten Wellpappe-Bahn (2),
- wobei die Krümmungs-Detektions-Vorrichtung (122) eine erste Krümmungs-Detektions-Einrichtung (123) umfasst, die stromaufwärts zu der Quer-Schneide-Vorrichtung (115) angeordnet ist,
f. eine Informations-Verarbeitungs-Einrichtung (125), die von der Krümmungs-Detektions-Vorrichtung (122) Krümmungs-Informationen zu den Wellpappe-Bögen (119) und/oder zu den Teil-Wellpappe-Bahnen (110) empfängt, und
g. mindestens eine in Abhängigkeit von der Informations-Verarbeitungs-Einrichtung (125) empfangener Signale betätigbare Wellpappe-Bogen-Krümmungs-Beeinflussungs-Einrichtung (20, 35, 44, 59, 69, 82, 90) zum Beeinflussen der Krümmung der Wellpappe-Bögen (119),
**dadurch gekennzeichnet, dass**
h. bei einer detektierten Veränderung der Krümmung der Teil-Wellpappe-Bahnen (110) an der ersten Krümmungs-Detektions-Einrichtung (123) die Informations-Verarbeitungs-Einrichtung (125) sofort eine Veränderung der Krümmung der Wellpappe-Bögen (119) durch mindestens eine der Wellpappe-Bogen-Krümmungs-Beeinflussungs-Einrichtungen (20, 35, 44, 59, 69, 82, 90) veranlasst, und
i. die Informations-Verarbeitungs-Einrichtung (125) eine Krümmungs-Tendenz von der ersten Krümmungs-Detektions-Einrichtung (123) zu einer zweiten Krümmungs-Detektions-Einrichtung (126) abspeichert, um eine Regel-Strecke auf die erste Krümmungs-Detektions-Einrichtung (123) zu verkürzen.

2. Wellpappe-Anlage nach Anspruch 1, **dadurch gekennzeichnet, dass** zwischen der ersten Material-Vorrats-Vorrichtung (5) und der ersten Wellpappe-Produktions-Vorrichtung (1) eine der ersten Material-Bahn (13) zugeordnete erste Wellpappe-Bogen-Krümmungs-Beeinflussungs-Einrichtung (20) zum Beeinflussen der Krümmung der Wellpappe-Bögen (119) angeordnet ist, wobei vorzugsweise die erste Wellpappe-Bogen-Krümmungs-Beeinflussungs-Einrichtung (20) als erste Vorheiz-Einrichtung zum Vorheizen der ersten Material-Bahn (13) von einer Seite aus ausgeführt ist und die Informations-Verarbeitungs-Einrichtung (125) zum Beeinflussen der Krümmung der Wellpappe-Bögen (119) eine Vorheiz-Temperatur der ersten Vorheiz-Einrichtung (20) ändert.

3. Wellpappe-Anlage nach Anspruch 1 oder 2, **dadurch gekennzeichnet, dass** die erste Wellpappe-Produktions-Vorrichtung (1) eine der ersten Material-Bahn (13) und/oder zweiten Material-Bahn (18) zugeordnete zweite Wellpappe-Bogen-Krümmungs-Beeinflussungs-Einrichtung (44) zum Beeinflussen der Krümmung der Wellpappe-Bögen (119) umfasst, wobei vorzugsweise die zweite Wellpappe-Bogen-Krümmungs-Beeinflussungs-Einrichtung (44) als Leim-Auftrags-Einrichtung zum Auftragen von Leim auf die erste Material-Bahn (13) und/oder auf die zweite Material-Bahn (18) von einer Seite aus ausgeführt ist und die Informations-Verarbeitungs-Einrichtung (125) zum Beeinflussen der Krümmung der Wellpappe-Bögen (119) eine Beleimung der ersten Material-Bahn (13) und/oder der zweiten Material-Bahn (18) durch die Leim-Auftrags-Einrichtung (44) ändert.

4. Wellpappe-Anlage nach einem der vorherigen Ansprüche, **gekennzeichnet durch**
a. eine dritte Material-Vorrats-Vorrichtung (7) zum Abgeben einer dritten Material-Bahn (28),
b. eine vierte Material-Vorrats-Vorrichtung (8) zum Abgeben einer vierten Material-Bahn (33), und
c. eine zweite Wellpappe-Produktions-Vorrichtung (3) zum Erzeugen einer mindestens einseitig kaschierten zweiten Wellpappe-Bahn (4) aus mindestens der dritten Material-Bahn (28) und der vierten Material-Bahn (33).

5. Wellpappe-Anlage nach Anspruch 4, **dadurch gekennzeichnet, dass** zwischen der dritten Material-Vorrats-Vorrichtung (7) und der zweiten Wellpappe-Produktions-Vorrichtung (3) eine der dritten Material-Bahn (28) zugeordnete dritte Wellpappe-Bogen-Krümmungs-Beeinflussungs-Einrichtung (35) zum Beeinflussen der Krümmung der Wellpappe-Bögen (119) angeordnet ist, wobei vorzugsweise die dritte Wellpappe-Bogen-Krümmungs-Beeinflussungs-Einrichtung (35) als zweite Vorheiz-Einrichtung zum Vorheizen der dritten Material-Bahn (28) von einer Seite aus ausgeführt ist und die Informations-Verarbeitungs-Einrichtung (125) zum Beeinflussen der Krümmung der Wellpappe-Bögen (119) eine Vorheiz-Temperatur der zweiten Vorheiz-Einrichtung (35) ändert.

6. Wellpappe-Anlage nach Anspruch 4 oder 5, **dadurch gekennzeichnet, dass** die zweite Wellpappe-Produktions-Vorrichtung (3) eine der dritten Material-Bahn (28) und/oder vierten Material-Bahn (33) zugeordnete vierte Wellpappe-Bogen-Krümmungs-Beeinflussungs-Einrichtung (59) zum Beeinflussen der Krümmung der Wellpappe-Bögen (119) umfasst, wobei vorzugsweise die vierte Wellpappe-Bogen-Krümmungs-Beeinflussungs-Einrichtung (59) als Leim-Auftrags-Einrichtung zum Auftragen von Leim auf die dritte Material-Bahn (28) und/oder auf die vierte Material-Bahn (33) von einer Seite aus ausgeführt ist und die Informations-Verarbeitungs-Einrichtung (125) zum Beeinflussen der Krümmung der Wellpappe-Bögen (119) eine Beleimung der dritten Material-Bahn (28) und/oder der vierten Material-Bahn (33) durch die Leim-Auftrags-Einrichtung (59) ändert.

7. Wellpappe-Anlage nach einem der Ansprüche 4 bis 6, **gekennzeichnet durch** eine Vorheiz-Anordnung (69) zum Vorheizen von mindestens der ersten Wellpappe-Bahn (2) und der zweiten Wellpappe-Bahn (4) von jeweils einer Seite aus, wobei die Vorheiz-Anordnung (69) eine fünfte Wellpappe-Bogen-Krümmungs-Beeinflussungs-Einrichtung zum Beeinflussen der Krümmung der Wellpappe-Bögen (119) bildet und die Informations-Verarbeitungs-Einrichtung (125) zum Beeinflussen der Krümmung der Wellpappe-Bögen (119) eine Vorheiz-Temperatur der Vorheiz-Anordnung (69) bei der ersten Wellpappe-Bahn (2) und/oder bei der zweiten Wellpappe-Bahn (4) ändert.

8. Wellpappe-Anlage nach einem der Ansprüche 4 bis 7, **gekennzeichnet durch** ein Leim-Werk (82) zum Aufbringen von Leim auf die erste Wellpappe-Bahn (2) und die zweite Wellpappe-Bahn (4) von jeweils einer Seite aus, wobei das Leim-Werk (82) eine sechste Wellpappe-Bogen-Krümmungs-Beeinflussungs-Einrichtung zum Beeinflussen der Krümmung der Wellpappe-Bögen (119) bildet und die Informations-Verarbeitungs-Einrichtung (125) zum Beeinflussen der Krümmung der Wellpappe-Bögen (119) eine Beleimung der ersten Wellpappe-Bahn (2) und/oder der zweiten Wellpappe-Bahn (4) durch das Leim-Werk (82) ändert.

9. Wellpappe-Anlage nach einem der Ansprüche 4 bis 8, **gekennzeichnet durch** eine Heiz-Andrück-Einrichtung (90) zum Drücken der ersten Wellpappe-Bahn (2), der zweiten Wellpappe-Bahn (4) und einer Deck-Bahn (76) aneinander und zum Beheizen mindestens einer derselben von einer Seite aus, wobei die Heiz-Andrück-Einrichtung (90) eine siebte Wellpappe-Bogen-Krümmungs-Beeinflussungs-Einrichtung zum Beeinflussen der Krümmung der Wellpappe-Bögen (119) bildet und die Informations-Verarbeitungs-Einrichtung (125) zum Beeinflussen der Krümmung der Wellpappe-Bögen (119) eine Heiz-Temperatur der Heiz-Andrück-Einrichtung (90) und/oder eine Feuchtigkeits-Zufuhr durch die Heiz-Andrück-Einrichtung (90) zu mindestens einer der äußeren Bahnen (2, 76) ändert.

10. Wellpappe-Anlage nach einem der vorherigen Ansprüche, **dadurch gekennzeichnet, dass** die erste Krümmungs-Detektions-Einrichtung (123) zwischen der Quer-Schneide-Vorrichtung (115) und einer stromaufwärts zu der Quer-Schneide-Vorrichtung (115) angeordneten Längs-Schneide-Rill-Einrichtung (97) zum Erzeugen der Teil-Wellpappe-Bahnen (110) angeordnet ist.

11. Wellpappe-Anlage nach einem der vorherigen Ansprüche, **dadurch gekennzeichnet, dass** die Krümmungs-Detektions-Vorrichtung (122) die zweite Krümmungs-Detektions-Einrichtung (126) umfasst, die stromabwärts zu der Quer-Schneide-Vorrichtung (115) zum Detektieren der Krümmung der Wellpappe-Bögen (119) angeordnet ist.

12. Wellpappe-Anlage nach Anspruch 11, **dadurch gekennzeichnet, dass** die Informations-Verarbeitungs-Einrichtung (125) eine von der ersten Krümmungs-Detektions-Einrichtung (123) detektierte Krümmung der Teil-Wellpappe-Bahnen (110) und eine von der zweiten Krümmungs-Detektions-Einrichtung (126) detektierte Krümmung der Wellpappe-Bögen (119) zumindest kurzzeitig speichert, wenn die Informations-Verarbeitungs-Einrichtung (125) eine Abweichung der Krümmung der Wellpappe-Bögen (119) bei der zweiten Krümmungs-Detektions-Einrichtung (126) von einer Soll-Krümmung der Wellpappe-Bögen (119) feststellt.

13. Wellpappe-Anlage nach Anspruch 11 oder 12, **dadurch gekennzeichnet, dass** die Informations-Verarbeitungs-Einrichtung (125) bei einer Veränderung der Krümmung der Teil-Wellpappe-Bahnen (110) an der ersten Krümmungs-Detektions-Einrichtung (123) durch mindestens eine der Wellpappe-Bogen-Krümmungs-Beeinflussungs-Einrichtungen (20, 35, 44, 59, 69, 82, 90) eine Regelung der Krümmung der Wellpappe-Bögen (119) unterbricht und die Informations-Verarbeitungs-Einrichtung (125) dann an der zweiten Krümmungs-Detektions-Einrichtung (126) die Ist-Krümmung der Wellpappe-Bögen (119) mit der Soll-Krümmung der Wellpappe-Bögen (119) vergleicht, wobei die Informations-Verarbeitungs-Einrichtung (125) dies wiederholt, bis die Ist-Krümmung der Wellpappe-Bögen (119) der Soll-Krümmung der Wellpappe-Bögen (119) entspricht.

14. Wellpappe-Anlage nach einem der vorherigen Ansprüche, **dadurch gekennzeichnet, dass** die Informations-Verarbeitungs-Einrichtung (125) mindestens eine der Wellpappe-Bogen-Krümmungs-Beeinflussungs-Einrichtungen (20, 35, 44, 59, 69, 82, 90) derart betätigt, dass die Wellpappe-Bögen (119) jeweils plan sind oder eine gewünschte Krümmung aufweisen.

15. Verfahren zum Herstellen von Wellpappe-Bögen (119), umfassend die Schritte:
- Abgeben einer ersten Material-Bahn (13) von einer ersten Material-Vorrats-Vorrichtung (5),
- Abgeben einer zweiten Material-Bahn (18) von einer zweiten Material-Vorrats-Vorrichtung (6),
- Erzeugen einer mindestens einseitig kaschierten ersten Wellpappe-Bahn (2) aus mindestens der ersten Material-Bahn (13) und der zweiten Material-Bahn (18) mittels einer ersten Wellpappe-Produktions-Vorrichtung (1),
- Erzeugen von Wellpappe-Bögen (119) aus mindestens der mindestens einseitig kaschierten ersten Wellpappe-Bahn (2) mittels einer Quer-Schneide-Vorrichtung (115),
- Detektieren einer Krümmung der Wellpappe-Bögen (119) und/oder von Teil-Wellpappe-Bahnen (110) aus mindestens der mindestens einseitig kaschierten ersten Wellpappe-Bahn (2) mittels einer Krümmungs-Detektions-Vorrichtung (122),
-- wobei die Krümmungs-Detektions-Vorrichtung (122) eine erste Krümmungs-Detektions-Einrichtung (123) umfasst, die stromaufwärts zu der Quer-Schneide-Vorrichtung (115) angeordnet ist,
- Übermitteln von Krümmungs-Informationen zu den Wellpappe-Bögen (119) und/oder den Teil-Wellpappe-Bahnen (110) von der Krümmungs-Detektions-Vorrichtung (122) zu einer Informations-Verarbeitungs-Einrichtung (125), und
- Beeinflussen der Krümmung der Wellpappe-Bögen (119) in Abhängigkeit von der Informations-Verarbeitungs-Einrichtung (125) empfangener Signale mittels mindestens einer betätigbaren Wellpappe-Bogen-Krümmungs-Beeinflussungs-Einrichtung (20, 35, 44, 59, 69, 82, 90),
- wobei bei einer detektierten Veränderung der Krümmung der Teil-Wellpappe-Bahnen (110) an der ersten Krümmungs-Detektions-Einrichtung (123) die Informations-Verarbeitungs-Einrichtung (125) sofort eine Veränderung der Krümmung der Wellpappe-Bögen (119) durch mindestens eine der Wellpappe-Bogen-Krümmungs-Beeinflussungs-Einrichtungen (20, 35, 44, 59, 69, 82, 90) veranlasst,
- wobei die Informations-Verarbeitungs-Einrichtung (125) eine Krümmungs-Tendenz von der ersten Krümmungs-Detektions-Einrichtung (123) zu einer zweiten Krümmungs-Detektions-Einrichtung (126) abspeichert, um eine Regel-Strecke auf die erste Krümmungs-Detektions-Einrichtung (123) zu verkürzen.

## Claims

1. Corrugated cardboard plant for producing corrugated cardboard sheets (119), comprising
a) a first material supply device (5) for dispensing a first material web (13);
b) a second material supply device (6) for dispensing a second material web (18);
c) a first corrugated cardboard production device (1) for generating from at least the first material web (13) and the second material web (18) a first corrugated cardboard web (2) that is laminated on at least one side;
d) a cross-cutting device (115) for generating corrugated cardboard sheets (119) from at least the first corrugated cardboard web (2) that is laminated on at least one side;
e) a curvature detection device (122) for detecting a curvature of the corrugated cardboard sheets (119) and/or of corrugated cardboard part-webs (110) from at least the first corrugated cardboard web (2) that is laminated on at least one side,
- wherein the curvature detection device (122) comprises a first curvature detection installation (123) which is disposed upstream of the cross-cutting device (115);
f) an information processing installation (125) which from the curvature detection device (122) receives items of curvature information pertaining to the corrugated cardboard sheets (119) and/or to the corrugated cardboard part-webs (110); and
g) at least one corrugated cardboard sheet curvature influencing installation (20, 35, 44, 59, 69, 82, 90) for influencing the curvature of the corrugated cardboard sheets (119) which is activatable as a function of signals received by the information processing installation (125),
**characterized in that**
h) the information processing installation (125) in the event of a detected variation of the curvature of the corrugated cardboard part-webs (110) at the first curvature detection installation (123) immediately initiates a variation of the curvature of the corrugated cardboard sheets (119) by at least one of the corrugated cardboard sheet curvature influencing installations (20, 35, 44, 59, 69, 82, 90); and
i) the information processing installation (125) memorizes a curvature trend from the first curvature detection installation (123) to a second curvature detection installation (126) so as to shorten a control path to the first curvature detection installation (123).

2. Corrugated cardboard plant according to Claim 1, **characterized in that** a first corrugated cardboard sheet curvature influencing installation (20), assigned to the first material web (13), for influencing the curvature of the corrugated cardboard sheets (119) is disposed between the first material supply device (5) and the first corrugated cardboard production device (1), wherein the first corrugated cardboard sheet curvature influencing installation (20) is preferably embodied as a first preheating installation for preheating the first material web (13) from one side, and the information processing installation (125) for influencing the curvature of the corrugated cardboard sheets (119) varies a preheating temperature of the first preheating installation (20).

3. Corrugated cardboard plant according to Claim 1 or 2, **characterized in that** the first corrugated cardboard production device (1) for influencing the curvature of the corrugated cardboard sheets (119) comprises a second corrugated cardboard sheet curvature influencing installation (44) that is assigned to the first material web (13) and/or the second material web (18), wherein the second corrugated cardboard sheet curvature influencing installation (44) is preferably embodied as a glue application installation for applying glue from one side to the first material web (13) and/or to the second material web (18), and the information processing installation (125) for influencing the curvature of the corrugated cardboard sheets (119) by way of the glue application installation (44) varies gluing of the first material web (13) and/or the second material web (18).

4. Corrugated cardboard plant according to one of the preceding claims, **characterized by**
a) a third material supply device (7) for dispensing a third material web (28);
b) a fourth material supply device (8) for dispensing a fourth material web (33); and
c) a second corrugated cardboard production device (3) for generating from at least the third material web (28) and the fourth material web (33) a second corrugated cardboard web (4) that is laminated on at least one side.

5. Corrugated cardboard plant according to Claim 4, **characterized in that** a third corrugated cardboard sheet curvature influencing device (35), assigned to the third material web (28), for influencing the curvature of the corrugated cardboard sheets (119) is disposed between the third material supply device (7) and the second corrugated cardboard production device (3), wherein the third corrugated cardboard sheet curvature influencing installation (35) is preferably embodied as a second preheating installation for preheating the third material web (28) from one side, and the information processing installation (125) for influencing the curvature of the corrugated cardboard sheets (119) varies a preheating temperature of the second preheating installation (35).

6. Corrugated cardboard plant according to Claim 4 or 5, **characterized in that** the second corrugated cardboard production device (3) for influencing the curvature of the corrugated cardboard sheets (119) comprises a fourth corrugated cardboard sheet curvature influencing installation (59) that is assigned to the third material web (28) and/or the fourth material web (33), wherein the fourth corrugated cardboard sheet curvature influencing installation (59) is preferably embodied as a glue application installation for applying glue from one side to the third material web (28) and/or to the fourth material web (33), and the information processing installation (125) for influencing the curvature of the corrugated cardboard sheets (119) by way of the glue application installation (59) varies gluing of the third material web (28) and/or the fourth material web (33).

7. Corrugated cardboard plant according to one of Claims 4 to 6, **characterized by** a preheating assembly (69) for preheating from in each case one side at least the first corrugated cardboard web (2) and the second corrugated cardboard web (4), wherein the preheating assembly (69) for influencing the curvature of the corrugated cardboard sheets (119) forms a fifth corrugated cardboard sheet curvature influencing installation, and the information processing installation (125) for influencing the curvature of the corrugated cardboard sheets (119) varies a preheating temperature of the preheating assembly (69) at the first corrugated cardboard web (2) and/or at the second corrugated cardboard web (4).

8. Corrugated cardboard plant according to one of Claims 4 to 7, **characterized by** a glue unit (82) for applying in each case from one side glue to the first corrugated cardboard web (2) and the second corrugated cardboard web (4), wherein the glue unit (82) for influencing the curvature of the corrugated cardboard sheets (119) forms a sixth corrugated cardboard sheet curvature influencing installation, and the information processing installation (125) for influencing the curvature of the corrugated cardboard sheets (119) by way of the glue unit (82) varies gluing of the first corrugated cardboard web (2) and/or the second corrugated cardboard web (4).

9. Corrugated cardboard plant according to one of Claims 4 to 8, **characterized by** a heated contact pressure installation (90) for mutually compressing the first corrugated cardboard web (2), the second corrugated cardboard web (4), and a cover web (76), and for heating from one side at least one of said webs (2, 4, 76), wherein the heated contact pressure installation (90) for influencing the curvature of the corrugated cardboard sheets (119) forms a seventh corrugated cardboard sheet curvature influencing installation , and the information processing installation (125) for influencing the curvature of the corrugated cardboard sheets (119) varies a heating temperature of the heated contact pressure installation (90) and/or a moisture infeed through the heated contact pressure installation (90) to at least one of the external webs (2, 76).

10. Corrugated cardboard plant according to one of the preceding claims, **characterized in that** the first curvature detection installation (123) is disposed between the cross-cutting device (115) and a longitudinal cutting/grooving installation (97), disposed upstream of the cross-cutting device, for generating the corrugated cardboard part-webs (110).

11. Corrugated cardboard plant according to one of the preceding claims, **characterized in that** the curvature detection device (122) comprises the second curvature detection installation (126) for detecting the curvature of the corrugated cardboard sheets (119) which is disposed downstream of the cross-cutting device (115).

12. Corrugated cardboard plant according to Claim 11, **characterized in that** the information processing installation (125), when the information processing installation (125) establishes a deviation of the curvature of the corrugated cardboard sheets (119) from a nominal curvature of the corrugated cardboard sheets (119) at the second curvature detection installation (126), at least briefly memorizes a curvature of the corrugated cardboard sub-webs (110) detected by the first curvature detection installation (123) and a curvature of the corrugated cardboard sheets (119) detected by the second curvature detection installation (126).

13. Corrugated cardboard plant according to Claim 11 or 12, **characterized in that** the information processing installation (125), in the event of a variation of the curvature of the corrugated cardboard sub-webs (110) at the first curvature detection installation (123), by way of at least one of the corrugated cardboard sheet curvature influencing installations (20, 35, 44, 59, 69, 82, 90) interrupts closed-loop controlling of the curvature of the corrugated cardboard sheets (119), and the information processing installation (125) at the second curvature detection installation (126) then compares the actual curvature of the corrugated cardboard sheets (119) with the nominal curvature of the corrugated cardboard sheets (119), wherein the information processing installation (125) repeats this until the actual curvature of the corrugated cardboard sheets (119) corresponds to the nominal curvature of the corrugated cardboard sheets (119).

14. Corrugated cardboard plant according to one of the preceding claims, **characterized in that** the information processing installation (125) activates at least one of the corrugated cardboard sheet curvature influencing installations (20, 35, 44, 59, 69, 82, 90) in such a manner that the corrugated cardboard sheets (119) are in each case planar or have a desired curvature.

15. Method for producing corrugated cardboard sheets (119), said method comprising the following steps:
- dispensing a first material web (13) from a first material supply device (5);
- dispensing a second material web (18) from a second material supply device (6);
- generating by means of a first corrugated cardboard production device (1) from at least the first material web (13) and the second material web (18) a first corrugated cardboard web (2) that is laminated on at least one side;
- generating by means of a cross-cutting device (115) from at least the first corrugated cardboard web (2) that is laminated on at least one side corrugated cardboard sheets (119);
- detecting by means of a curvature detection device (122) a curvature of the corrugated cardboard sheets (119) and/or of corrugated cardboard part-webs (110) from at least the first corrugated cardboard web (2) that is laminated on at least one side,
- wherein the curvature detection device (122) comprises a first curvature detection installation (123) which is disposed upstream of the cross-cutting device (115);
- transmitting items of curvature information pertaining to the corrugated cardboard sheets (119) and/or the corrugated cardboard part-webs (110) from the curvature detection device (122) to an information processing installation (125); and
- influencing by means of at least one activatable corrugated cardboard sheet curvature influencing installation (20, 35, 44, 59, 69, 82, 90) the curvature of the corrugated cardboard sheets (119) as a function of signals received by the information processing installation (125);
- wherein the information processing installation (125) in the event of a detected variation of the curvature of the corrugated cardboard part-webs (110) at the first curvature detection installation (123) immediately initiates a variation of the curvature of the corrugated cardboard sheets (119) by at least one of the corrugated cardboard sheet curvature influencing installations (20, 35, 44, 59, 69, 82, 90);
- wherein the information processing installation (125) memorizes a curvature trend from the first curvature detection installation (123) to a second curvature detection installation (126) so as to shorten a control path to the first curvature detection installation (123).

## Revendications

1. Installation à carton ondulé pour la fabrication de feuilles de carton ondulé (119), comprenant
a. un premier dispositif d'alimentation en matériau (5) permettant de distribuer une première bande de matériau (13),
b. un deuxième dispositif d'alimentation en matériau (6) permettant de distribuer une deuxième bande de matériau (18),
c. un premier dispositif de production de carton ondulé (1) permettant de produire une première bande de carton ondulé (2) laminée sur au moins un côté à partir d'au moins la première bande de matériau (13) et la deuxième bande de matériau (18),
d. un dispositif de coupe transversale (115) permettant de produire des feuilles de carton ondulé (119) à partir d'au moins la première bande de carton ondulé (2) laminée sur au moins un côté,
e. un dispositif de détection de courbure (122) permettant de détecter une courbure des feuilles de carton ondulé (119) et/ou des bandes partielles de carton ondulé (110) à partir d'au moins la première bande de carton ondulé (2) laminée sur au moins un côté,
- le dispositif de détection de courbure (122) comprenant un premier moyen de détection de courbure (123) disposé en amont du dispositif de coupe transversale (115),
f. un moyen de traitement d'informations (125) recevant des informations de courbure du dispositif de détection de courbure (122) concernant les feuilles de carton ondulé (119) et/ou les bandes partielles de carton ondulé (110), et
g. au moins un moyen de sollicitation de courbure de feuille de carton ondulé (20, 35, 44, 59, 69, 82, 90) pouvant fonctionner en réponse à des signaux reçus par le moyen de traitement d'informations (125) pour solliciter la courbure des feuilles de carton ondulé (119),
**caractérisée en ce que**
h. lorsqu'une modification de la courbure des bandes partielles de carton ondulé (110) est détectée au niveau du premier moyen de détection de courbure (123), le moyen de traitement d'informations (125) amène immédiatement au moins l'un des moyens de sollicitation de courbure de feuille de carton ondulé (20, 35, 44, 59, 69, 82, 90) à modifier la courbure des feuilles de carton ondulé (119) ; et
i. le moyen de traitement d'informations (125) mémorise une tendance de courbure du premier moyen de détection de courbure (123) vers un second moyen de détection de courbure (126) afin de raccourcir un chemin de commande vers le premier moyen de détection de courbure (123).

2. Installation à carton ondulé selon la revendication 1, **caractérisée en ce qu'un** premier moyen de sollicitation de courbure de feuille de carton ondulé (20) associé à la première bande de matériau (13) pour solliciter la courbure des feuilles de carton ondulé (119) est disposé entre le premier dispositif d'alimentation en matériau (5) et le premier dispositif de production de carton ondulé (1), le premier moyen de sollicitation de courbure de feuille de carton ondulé (20) étant de préférence conçu comme premier moyen de préchauffage permettant de préchauffer la première bande de matériau (13) à partir d'un côté, et **en ce que** le moyen de traitement d'informations (125) permettant de solliciter la courbure des feuilles de carton ondulé (119) modifie une température de préchauffage du premier moyen de préchauffage (20).

3. Installation à carton ondulé selon la revendication 1 ou 2, **caractérisée en ce que** le premier dispositif de production de carton ondulé (1) comprend un second moyen de sollicitation de courbure de feuille de carton ondulé (44) associé à la première bande de matériau (13) et/ou à la deuxième bande de matériau (18) pour solliciter la courbure des feuilles de carton ondulé (119), le deuxième moyen de sollicitation de courbure de feuille de carton ondulé (44) étant de préférence conçu comme un moyen d'application de colle permettant d'appliquer de la colle sur la première bande de matériau (13) et/ou la deuxième bande de matériau (18) à partir d'un côté, et **en ce que** le moyen de traitement d'informations (125) pour solliciter la courbure des feuilles de carton ondulé (119) modifie un collage de la première bande de matériau (13) et/ou de la deuxième bande de matériau (18) réalisé par le moyen d'application de colle (44).

4. Installation à carton ondulé selon l'une des revendications précédentes, **caractérisée par**
a. un troisième dispositif d'alimentation en matériau (7) permettant de distribuer une troisième bande de matériau (28),
b. un quatrième dispositif d'alimentation en matériau (8) permettant de distribuer une quatrième bande de matériau (33), et
c. un deuxième dispositif de production de carton ondulé (3) permettant de produire une deuxième bande de carton ondulé (4) laminée sur au moins un côté à partir d'au moins la troisième bande de matériau (28) et la quatrième bande de matériau (33).

5. Installation à carton ondulé selon la revendication 4, **caractérisée en ce qu'un** troisième moyen de sollicitation de courbure de feuille de carton ondulé (35) associé à la troisième bande de matériau (28) pour solliciter la courbure des feuilles de carton ondulé (119) est disposé entre le troisième dispositif d'alimentation en matériau (7) et le deuxième dispositif de production de carton ondulé (3), le troisième moyen de sollicitation de courbure de feuille de carton ondulé (35) étant de préférence conçu comme deuxième moyen de préchauffage permettant de préchauffer la troisième bande de matériau (28) à partir d'un côté, et **en ce que** le moyen de traitement d'informations (125) permettant de solliciter la courbure des feuilles de carton ondulé (119) modifie une température de préchauffage du deuxième moyen de préchauffage (35).

6. Installation à carton ondulé selon la revendication 4 ou 5, **caractérisée en ce que** le deuxième dispositif de production de carton ondulé (3) comprend un quatrième moyen de sollicitation de courbure de feuille de carton ondulé (59) associé à la troisième bande de matériau (28) et/ou à la quatrième bande de matériau (33) permettant de solliciter la courbure des feuilles de carton ondulé (119), le quatrième moyen de sollicitation de courbure de feuille de carton ondulé (59) étant de préférence conçu comme moyen d'application de colle permettant d'appliquer de la colle sur la troisième bande de matériau (28) et/ou la quatrième bande de matériau (33) à partir d'un côté, et **en ce que** le moyen de traitement d'informations (125) pour solliciter la courbure des feuilles de carton ondulé (119) modifie un collage de la troisième bande de matériau (28) et/ou de la quatrième bande de matériau (33) réalisé par le moyen d'application de colle (59).

7. Installation à carton ondulé selon l'une des revendications 4 à 6, **caractérisée par** un système de préchauffage (69) permettant de préchauffer au moins la première bande de carton ondulé (2) et la deuxième bande de carton ondulé (4), chacune d'un côté, le système de préchauffage (69) formant un cinquième moyen de sollicitation de courbure de feuille de carton ondulé permettant de solliciter la courbure des feuilles de carton ondulé (119), et en ce que le moyen de traitement d'informations (125) permettant de solliciter la courbure des feuilles de carton ondulé (119) modifie une température de préchauffage du système de préchauffage (69) sur une première bande de carton ondulé (2) et/ou sur une deuxième bande de carton ondulé (4).

8. Installation à carton ondulé selon l'une quelconque des revendications 4 à 7, **caractérisée par** une unité d'encollage (82) permettant d'appliquer de la colle sur la première bande de carton ondulé (2) et sur la deuxième bande de carton ondulé (4), chacune d'un côté, l'unité d'encollage (82) formant un sixième moyen de sollicitation de courbure de feuille de carton ondulé permettant de solliciter la courbure des feuilles de carton ondulé (119), et en ce que le moyen de traitement d'informations (125) permettant de solliciter la courbure des feuilles de carton ondulé (119) modifie un collage de la première bande de carton ondulé (2) et/ou de la deuxième bande de carton ondulé (4) réalisé par l'unité d'encollage (82).

9. Installation à carton ondulé selon l'une quelconque des revendications 4 à 8, **caractérisée par** un moyen de pressage à chaud (90) permettant de presser la première bande de carton ondulé (2), la deuxième bande de carton ondulé (4) et une bande de revêtement (76) l'une contre l'autre, et permettant de chauffer au moins l'une de celles-ci à partir d'un côté, le moyen de pressage à chaud (90) formant un septième moyen de sollicitation de courbure de feuille de carton ondulé permettant de solliciter la courbure des feuilles de carton ondulé (119), et en ce que le moyen de traitement d'informations (125) permettant de solliciter la courbure des feuilles de carton ondulé (119) modifie une température de chauffage du moyen de pressage à chaud (90) et/ou un apport d'humidité effectué par le moyen de pressage à chaud (90) vers au moins l'une des bandes extérieures (2, 76).

10. Installation à carton ondulé selon l'une des revendications précédentes, **caractérisée en ce que** le premier moyen de détection de courbure (123) est disposé entre le dispositif de coupe transversale (115) et un moyen de rainurage de coupe longitudinale (97) disposé en amont du dispositif de coupe transversale (115) de façon à produire les bandes partielles de carton ondulé (110).

11. Installation à carton ondulé selon l'une des revendications précédentes, **caractérisée en ce que** le dispositif de détection de courbure (122) comprend le deuxième moyen de détection de courbure (126) disposé en aval du dispositif de coupe transversale (115) de façon à détecter la courbure des feuilles de carton ondulé (119).

12. Installation à carton ondulé selon la revendication 11, **caractérisée en ce que** le moyen de traitement d'informations (125) mémorise au moins brièvement une courbure des bandes partielles de carton ondulé (110) détectées par le premier moyen de détection de courbure (123) et une courbure des feuilles de carton ondulé (119) détectée par le deuxième moyen de détection de courbure (126) lorsque le moyen de traitement d'informations (125) détecte un écart de la courbure des feuilles de carton ondulé (119) concernant le deuxième moyen de détection de courbure (126) par rapport à une courbure de consigne des feuilles de carton ondulé (119).

13. Installation à carton ondulé selon la revendication 11 ou 12, **caractérisée en ce que** le moyen de traitement d'informations (125) interrompt, lors d'une modification de la courbure des bandes partielles de carton ondulé (110) sur le premier moyen de détection de courbure (123) par au moins l'un des moyens de sollicitation de courbure de feuille de carton ondulé (20, 35, 44, 59, 69, 82, 90), un réglage de la courbure des feuilles de carton ondulé (119), et **en ce que** le moyen de traitement d'informations (125) compare ensuite, au niveau du deuxième moyen de détection de courbure (126), la courbure réelle des feuilles de carton ondulé (119) à la courbure de consigne des feuilles de carton ondulé (119), le moyen de traitement d'informations (125) répétant l'opération jusqu'à ce que la courbure réelle des feuilles de carton ondulé (119) corresponde à la courbure de consigne des feuilles de carton ondulé (119).

14. Installation à carton ondulé selon l'une des revendications précédentes, **caractérisée en ce que** le moyen de traitement d'informations (125) actionne au moins l'un des moyens de sollicitation de courbure de feuille de carton ondulé (20, 35, 44, 59, 69, 82, 90) de sorte que les feuilles de carton ondulé (119) sont chacune plates ou présentent une courbure souhaitée.

15. Procédé de fabrication de feuilles de carton ondulé (119), comprenant les étapes :
- de décharge d'une première bande de matériau (13) à partir d'un premier dispositif d'alimentation en matériau (5),
- de décharge d'une deuxième bande de matériau (18) à partir d'un deuxième dispositif d'alimentation en matériau (6),
- de production, au moyen d'un premier dispositif de production de carton ondulé (1), d'une première bande de carton ondulé (2) laminée sur au moins un côté à partir d'au moins la première bande de matériau (13) et la deuxième bande de matériau (18),
- de production de feuilles de carton ondulé (119) à partir d'au moins la première bande de carton ondulé (2) laminée sur au moins un côté au moyen d'un dispositif de coupe transversale (115),
- de détection d'une courbure des feuilles de carton ondulé (119) et/ou des bandes partielles de carton ondulé (110) à partir d'au moins la première bande de carton ondulé (2) laminée sur au moins un côté au moyen d'un dispositif de détection de courbure (122),
-- le dispositif de détection de courbure (122) comprenant un premier moyen de détection de courbure (123) disposé en amont du dispositif de coupe transversale (115),
- de transmission d'informations de courbure concernant les feuilles de carton ondulé (119) et/ou les bandes partielles de carton ondulé (110), de l'appareil de détection de courbure (122) à un moyen de traitement d'informations (125), et
- de sollicitation de la courbure des feuilles de carton ondulé (119) en réponse à des signaux reçus par le moyen de traitement d'informations (125), au moyen d'au moins un moyen de sollicitation de courbure de feuille de carton ondulé (20, 35, 44, 59, 69, 82, 90) pouvant être activé,
- dans lequel, lorsqu'une modification de la courbure des bandes partielles de carton ondulé (110) est détectée au niveau du premier moyen de détection de courbure (123), le moyen de traitement d'informations (125) amène immédiatement au moins l'un des moyens de sollicitation de courbure de feuille de carton ondulé (20, 35, 44, 59, 69, 82, 90) à modifier la courbure des feuilles de carton ondulé (119),
- le moyen de traitement d'informations (125) mémorisant une tendance de courbure du premier moyen de détection de courbure (123) vers un deuxième moyen de détection de courbure (126) afin de raccourcir un chemin de commande sur le premier moyen de détection de courbure (123).
